# EUROPÄISCHE PATENTSCHRIFT

(11) **EP 1 669 852 B1**
(45) Veröffentlichungstag und Bekanntmachung des Hinweises auf die Patenterteilung: **20.05.2015**
(21) Anmeldenummer: 05111764.6
(22) Anmeldetag: 07.12.2005
(51) Int. Cl.: G06F 3/12, G06F 17/22

(54) **Verfahren und Computerprogramm zum Umwandeln eines Eingangs-Dokumentendatenstroms mit einem oder mehreren Dokumenten in eine strukturierte Datendatei**
Method and computer program for converting an incoming document data stream comprising one or more documents into a structured data file
Procédé et programme informatique destinés à la transformation d'un flux d'entrée de données de documents comprenant un ou plusieurs documents en un fichier de données structuré

(30) Priorität: 08.12.2004 DE 102004059120; 30.06.2005 DE 102005030645
(43) Veröffentlichungstag der Anmeldung: 14.06.2006
(73) Patentinhaber: Océ Printing Systems GmbH & Co. KG, 85586 Poing (DE)
(72) Erfinder: Engbrocks, Werner, 85586 Poing. (DE); Landmesser, Georg, 85540 Haar (DE); Fromm, Matthias, 85570 Markt Schwaben (DE)
(74) Vertreter: Schaumburg, Thoenes, Thurn, Landskron, Eckert

(56) Entgegenhaltungen:
- DE-A1- 10 250 842
- US-A1- 2001 032 217
- "Adobe Central Pro Output Server (White Paper)" [Online] März 2004 (2004-03), ADOBE SYSTEMS INCORPORATED , XP002454964 Gefunden im Internet: URL:http://www.adobe.com/products/server/c entralpro/pdfs/centralpro_wp.pdf> [gefunden am 2007-10-09] * das ganze Dokument *

## Beschreibung

Die Erfindung betrifft ein Verfahren zum Umwandeln eines Eingangs-Dokumentendatenstroms mit einem oder mehreren Dokumenten in eine strukturierte Datendatei zur Erzeugung eines Ausgangs-Dokumentendatenstroms und ein Computerprogramm-Produkt zum Erstellen eines Regelsatzes für ein solches Verfahren.

Aus der WO 2004/040432 A1 ist ein Verfahren und eine Vorrichtung zum Verarbeiten eines Dokumentendatenstromes eines Eingangsformates zu einem Ausgangsformat bekannt. Der Eingangs-Dokumentendatenstrom wird mittels eines Übersetzungsstufenmoduls in normierte Daten umgesetzt. Das Übersetzungsstufenmodul wird von einer Regeldatei gesteuert. Die Regeldatei enthält Mapping-Regeln, die aus dem Eingangs-Dokumentendatenstrom und/oder einem gegebenenfalls neu zu erstellenden Design-Datensatzes und/oder aus eingangsdaten-spezifischen Hilfsdateien gebildet werden. Sowohl der Design-Datensatz als auch die Regeldatei können frei editierbar sein. Der Design-Datensatz kann aus dem Eingangs-Dokumentendatenstrom und/oder aus eingangsdaten-spezifischen Hilfsdateien gebildet werden und zusätzlich bei der Bildung eines Dokumenten-Templates verwendet werden, das die Formatierung der normierten Daten steuert. Alternativ dazu kann die Regeldatei auch direkt aus dem Eingangs-Dokumentendatenstrom oder anderen Datei-Informationen aus Hilfsdateien gewonnen werden.

Die in der Regeldatei angegebenen Mapping-Regeln sind spezifisch für den Eingangs-Dokumentendatenstrom. Sie geben an, welches Element des Eingangs-Dokumentendatenstroms zu welchen Elementen des Design-Datensatzes zuzuordnen ist. Der Design-Datensatz enthält die Strukturdefinition der normierten Daten, wobei für verschiedene Strukturelemente, zum Beispiel für Kundennummern, Namen, Logos usw., Typ-Deklarationen vorgesehen sind. In den normierten Rohdaten können dann auch Datengruppen gebildet werden, die zusammengehören, insbesondere all diejenigen Daten, die zu einem Dokument gehören. Somit sind für jedes Dokument alle zugehörigen Daten im normierten Rohdatenstrom verfügbar. Ein Dokumenten-Template dient als Strukturvorlage für die zu erzeugenden Dokumente und beschreibt, welche Formatierungsanweisungen im normierten Datenstrom hinzuzufügen sind. Es kann Elemente aus dem Design-Datensatz enthalten und/oder frei programmierte statische oder dynamische Elemente enthalten. Das Dokumenten-Template dient dazu, die Formatbildungseinrichtung (Formatter oder document composition engine) zu steuern. Aus dem normierten Rohdatenstrom wird durch die Formatbildungseinrichtung dokumentenweise ein ressourcen-orientierter Datenstrom gebildet. Soweit bereits in den Rohdaten Formatierungen enthalten waren, werden diese beibehalten und soweit die Rohdaten unformatiert sind und im Dokumenten-Template zu den entsprechenden Datenfeldern Formatierungsangaben enthalten sind, werden diese ressourcen-orientiert in der Formatbildungseinrichtung hinzugefügt, wobei Ressourcen, die mehrfach innerhalb eines Datenstromes benötigt werden, weiter verarbeitet werden, d.h. im ressourcen-orientierten Datenstrom hauptsächlich durch Aufrufen der Ressourcen eingefügt werden, wobei die Ressourcen selbst nur einmal intern vorhanden sind oder extern von einer Ressourcen-Datei geladen oder auch nur referenziert werden können.

Bei diesem Verfahren ist das Erstellen der Regeldatei aufwändig und erfordert erhebliche Softwarekenntnisse.

Die Adobe Systems, Inc., USA bietet unter der Produktbezeichnung Adobe Central Pro Output Server ein Produkt an, mit dem es auch möglich ist, einen Eingangs-Dokumentendatenstrom in eine Datendatei automatisch umzusetzen, siehe z.B: "Adobe Central Pro Output Server (White Paper)", [Online] März 2004 (2004-03), Adobe Systems Incorporated, XP002454964. Die hierbei verwendeten Regeln können von einem Benutzer mittels einer grafischen Benutzeroberfläche eingegeben werden, wobei ein Vorlagedokument auf der Benutzeroberfläche dargestellt wird. Einzelne Felder des Vorlagedokumentes können vom Benutzer ausgewählt und ihnen kann irgendeine Typ-Deklaration zugeordnet werden. Es können auch bestimmte Abschnitte im Dokument definiert werden, die wiederholt vorkommen. Diese Abschnitte werden anhand eines Regelsatzes festgelegt, der den Abschnitttyp im Eingangs-Dokumentendatenstrom erkennt und dann die entsprechenden Felder ausliest. Diese Abschnitte erstrecken sich jeweils über die gesamte Seitenbreite.

Beim Ausführen der automatischen Umsetzung des Eingangs-Dokumentendatenstroms in die Datendatei werden aus dem Eingangs-Dokumentendatenstrom alle nicht-auszulesenden Daten entfernt und die auszulesenden Daten werden in der gleichen Reihenfolge wie im Eingangs-Dokumentendatenstrom in der Datendatei abgespeichert, wobei den einzelnen Daten jeweils eine Typ-Deklaration hinzugefügt ist. Bei diesem bekannten Verfahren erhält man somit eine Datendatei, in der die einzelnen Daten in der gleichen Reihenfolge wie im Eingangs-Dokumentendatenstrom aufeinander folgend aufgeführt sind.

Es besteht ein erheblicher Bedarf, Eingangs-Dokumentendatenströme von seit langem benutzten Systemen, die jedoch aus sicherheitsrelevanten Gründen weiter benutzt werden sollen, möglichst flexibel in Ausgangs-Dokumentendatenströme umzuwandeln. Derartige seit langem eingesetzte Systeme werden vor allem bei Banken und Versicherungen verwendet und allgemein als Legacy-Anwendungen bezeichnet. Diese Systeme besitzen oftmals nur sehr beschränkte Formatierungsmöglichkeiten und die Daten werden häufig als sogenannte ASCII Zeilendatenstrom ausgegeben, der im wesentlichen nur Schriftzeichen sowie Zeilen- und Seitenumbrüche enthält. Man möchte jedoch diese Daten gegenüber dem Kunden in einem zeitgemäßen Format darstellen. In der US 2001/032217 A1 sind Datenstrukturen des Formats Extensible Markup Language (XML) beschrieben, in dem Dokumentendaten in verschiedenen Ebenen strukturierbar sind.

Bei dem Produkt Adobe Central Pro Output Server wird eine allgemeine Datendatei erstellt, die für unterschiedliche Ausgangs-Dokumentendatenströme geeignet ist. Es hat sich jedoch gezeigt, dass die hierbei erstellte Datenliste nur bedingt für die Weiterverarbeitung geeignet ist, da das Auffinden einzelner Daten, die in der gleichen Reihenfolge im Ursprungsdokument angeordnet sind, sich sehr schwierig gestalten kann.

Ferner ist das Erstellen der Regelsätze, insbesondere wenn die Dokumente des Eingangs-Dokumentendatenstroms komplexe Strukturen, wie zum Beispiel Tabellen, besitzen, bei dem oben genannten Verfahren sehr aufwändig.

Einem ersten Aspekt der Erfindung liegt die Aufgabe zugrunde, ein Verfahren und ein Computerprogramm-Produkt zum Umwandeln eines Eingangs-Dokumentendatenstroms mit einem oder mehreren Dokumenten in eine Datendatei zur Erzeugung eines Ausgangs-Dokumentendatenstroms zu schaffen, das eine sehr flexibel und einfach in einen beliebig formatierten Ausgangs-Dokumentendatenstrom umsetzbare Datendatei ergibt.

Einem zweiten Aspekt der Erfindung liegt die Aufgabe zugrunde, ein Verfahren und ein Computerprogramm-Produkt zu schaffen, das eine einfache Eingabe von Regeln zur Umsetzung eines Eingangs-Dokumentendatenstroms in eine strukturierte Datendatei ermöglicht. Insbesondere liegt dem zweiten Aspekt der Erfindung die Aufgabe zugrunde, ein Verfahren und ein Computerprogramm-Produkt zum einfachen Erzeugen eines Regelsatzes für eine Regeldatei für ein Verfahren beider Aspekte der Erfindung anzugeben.

Die beide Aspekte umfassende Aufgabe der Erfindung wird durch ein Verfahren mit den Merkmalen des Anspruchs 1 und durch ein Computerprogramm-Produkt mit den Merkmalen des Anspruchs 57 gelöst.

Vorteilhafte Ausgestaltungen der Erfindung sind in den jeweiligen Unteransprüchen angegeben.

Beim erfindungsgemäßen Verfahren zum Umwandeln eines Eingangs-Dokumentendatenstroms mit einem oder mehreren Dokumenten in eine strukturierte Datendatei zur Erzeugung eines Ausgangs-Dokumentendatenstroms gemäß dem ersten Aspekt der Erfindung werden aus dem Eingangs-Dokumentendatenstrom Daten gemäß einem vorbestimmten Regelsatz extrahiert und in die strukturierte Datendatei gespeichert, wobei in der strukturierten Datendatei den einzelnen Datenfeldern Feldnamen bzw. Typ-Deklarationen zugeordnet sind, die Datenfelder in mehrere Datenebenen strukturierbar sind, und der Regelsatz derart ausgebildet ist, dass beliebige Daten aus dem Eingangs-Dokumentendatenstrom auf ein beliebiges Datenfeld der strukturierten Datendatei abbildbar sind. Dabei wird insbesondere eine in einem Computersystem abgespeicherte Prozesslogik berücksichtigt.

Mit dem erfindungsgemäßen Verfahren können insbesondere im Rahmen der Prozesslogik beliebige Daten des Eingangs-Dokumentendatenstroms eines Dokumentes auf beliebige Datenfelder der strukturierten Datendatei abgebildet werden. Die strukturierte Datendatei enthält somit nach beliebigen vom Benutzer vorgegebenen Gesichtspunkten geordnete Daten, die auch in mehreren Datenebenen strukturiert sein können. Diese strukturierte Datendatei stellt somit eine Art

Datenbank dar, bei der die Daten in einer vom Benutzer vorgegebenen Baumstruktur angeordnet sind.

Verfahren zum Drucken von Daten aus Datenbanken sind hinlänglich bekannt und hierbei können beliebige Formate eingesetzt werden.

Durch das Erzeugen einer strukturierten Datendatei wird aus dem Eingangs-Dokumentendatenstrom eine in einem Druckprozess sehr flexibel weiter verarbeitbare Datenbank zur Verfügung gestellt.

Die Erfindung beruht auf der Erkenntnis, dass durch das Schaffen von Strukturdefinitionen zur Verarbeitung von Eingangs-Dokumentendatenströmen der oben genannten Art, insbesondere von sogenannten Line Data Datenströmen, die ASCII codiert sein können, oder auch von Advanced Function Presentation (AFP) Datenströmen, ein zum Erzeugen der Daten korrespondierender Umkehrprozess beschrieben und gesteuert werden kann, wodurch die ursprüngliche Datenstruktur, insbesondere die Struktur von Datenbankdaten, wiedergewonnen werden kann. Der Umkehrprozess gibt dann an, wie die aus einem Formatierungsprozess erzeugten Seiten- und Dokumentenstrukturen interpretiert werden müssen, um die dem Formatierungsprozess insbesondere in einer Legacy Anwendung zugrunde liegenden Nutzdaten einschließlich ihrer übergeordneten Gruppenstrukturen wiederzugewinnen. Zur Definition der Struktur dient als grafisches Hilfsmittel insbesondere eine Baumstruktur, die gemäß dem zweiten Aspekt der Erfindung erzeugt und vorteilhaft ausgenutzt wird.

Das erfindungsgemäße Verfahren des zweiten Aspekts der Erfindung ist derart ausgebildet, dass einzelne Regeln des Regelsatzes erstellt werden, indem auf einer graphischen Benutzeroberfläche in einem Fenster ein Vorlagedokument und in einem anderen

Fenster Datenfelder in einer Baumstruktur dargestellt werden und durch Markieren von insbesondere logisch zusammengehörigen Daten im Vorlagedokument jeweils ein Markierungsbereich und/oder ein Quelldatenfeld definiert wird. Dem Markierungsbereich bzw. dem Quelldatenfeld wird dabei ein ihm entsprechendes Strukturelement zugewiesen und dieses insbesondere in der Baumstruktur wiedergegeben und/oder mit dieser verknüpft. Beim Verknüpfen eines solchen Quelldatenfeldes bzw. einer solchen Markierung des Vorlagendokumentes mit einem Datenfeld wird weiterhin insbesondere automatisch eine Regel erstellt, mit welcher ein Quelldatenfeld bzw. eine der Markierung entsprechende Gruppe von Quelldatenfeldern aus dem Eingangs-Dokumentendatenstrom ausgelesen und deren Inhalt gemäß der strukturierten Datendatei in dem korrespondierenden Datenfeld bzw. Strukturelement abgespeichert wird.

Mit den Strukturelementen der Baumstruktur lassen sich Variablen wie z.B. Felder oder Tabellenvariablen für die strukturierte Datendatei angeben, in die Quelldatenfelder des Eingangs-Dokumentendatenstroms einlesbar sind zur Bildung der strukturierten Datendatei.

Das erfindungsgemäße Computerprogramm-Produkt zum Erstellen eines Regelsatzes für das Verfahren gemäß dem zweiten Aspekt der Erfindung umfasst eine graphische Benutzeroberfläche mit mehreren Fenstern, wobei in einem Fenster ein Vorlagedokument darstellbar ist, das dem Format der im Eingangs-Dokumentendatenstrom enthaltenen Dokumente entspricht, und in einem weiteren Fenster die Datenfelder in einer Baumstruktur, die mehrere Ebenen umfassen kann, anordenbar sind. Gemäß dem zweiten Aspekt der Erfindung wird mit grafischen Mitteln ein Quelldatum des Vorlagedokuments markiert oder logisch zusammengehörige Quelldaten des Vorlagedokuments gemeinsam als zusammengehöriger Bereich markiert und mindestens ein dem Markierungsbereich entsprechendes Strukturelement dem Markierungsbereich zugewiesen.

Gemäß dem zweiten Aspekt der Erfindung sind insbesondere Mittel zum Definieren von einem oder mehreren Quelldatenfeldern und zum Verknüpfen derselben mit einem oder mehreren Strukturelementen, insbesondere mit den Datenfeldern vorgesehen. Bei einer solchen Verknüpfung wird insbesondere automatisch eine Regel erstellt, zum Auslesen eines oder mehrerer Quelldatenfelder aus dem Eingangs-Dokumentendatenstrom und zum Abspeichern deren Inhalte in die strukturierte Datendatei in dem bzw. den korrespondierenden Datenfeldern. Die dem Markierungsbereich zugewiesenen Strukturelemente werden insbesondere auch der Baumstruktur zugewiesen.

Das der Erfindung entsprechende Computerprogramm-Produkt stellt dem Benutzer auf der grafischen Benutzeroberfläche zumindest zwei Fenster zur Verfügung, wobei in einem Fenster das Vorlagendokument dargestellt ist und im anderen Fenster die Baumstruktur, deren Strukturelemente wie z.B. Datenfelder der Benutzer computergestützt darstellen, einfügen, verändern und/oder löschen kann. Der Benutzer kann hierbei die Baumstruktur selbst erstellen, ihre Strukturelemente können automatisch oder teilautomatisch erstellt werden. Es kann aber auch eine bereits vorhandene Struktur übernommen werden und insbesondere eine Struktur aus mehreren vorgegebenen Vorlagenstrukturen ausgewählt werden. Die Quelldatenfelder im Vorlagedokument sind mit einfachen Mitteln mit den als strukturierte Datenfelder ausgebildeten Strukturelementen verknüpfbar, wobei jeweils automatisch eine Regel erstellt wird.

Dieses Computerprogramm-Produkt erlaubt somit eine schnelle und einfache Erstellung eines Regelsatzes zum Umsetzen eines Eingangs-Dokumentendatenstromes in eine erfindungsgemäß strukturierte Datendatei.

Eine Baumstruktur im Sinne der vorliegenden Erfindung ist jede Struktur, bei welcher ein oder mehrere Datenfelder jeweils einem Oberbegriff, d.h. einem übergeordneten Strukturelement, untergeordnet werden können. Diese Oberbegriffe sind wiederum weiteren Oberbegriffen unterordenbar. Eine solche Baumstruktur umfasst somit Zweige, wobei an den Verzweigungspunkten (Knoten) der Zweige jeweils Oberbegriffe als übergeordnete Strukturelemente angeordnet sind und die Endpunkte der Zweige durch Datenfelder als untergeordnete Strukturelemente dargestellt sind. Eine solche Datenstruktur kann mehrere Verzweigungsebenen umfassen, wobei in jeder Ebene Strukturelemente wie z.B. Datenfelder angeordnet sein können.

Vorteilhaft an der Erfindung ist, dass mit den grafischen Elementen wie der Baumstruktur und/oder den Mitteln zur Markierung von Bereichen des Vorlagedokuments eine entsprechende, einfach und intuitiv zu bedienende Benutzeroberfläche angegeben werden kann, mit der strukturelle Informationen der ursprünglichen Nutzdaten wie z.B. ihre Herkunft aus ein- und demselben Feld einer Datenbank wiedergewonnen werden können.

Strukturelemente gemäß dem zweiten Aspekt der Erfindung sind insbesondere einem Zweig in der Baumstruktur zugeordnet und stellen insbesondere einen Verzweigungspunkt in der Baumstruktur dar. Dem Strukturelement können somit mehrere weitere Strukturelemente (Unterzweige) untergeordnet sein. Datentechnisch kann ein derartiger Zweig als Objekt mit mehreren untergeordneten Instanzen abgebildet werden. Dabei kann als Strukturelement ein einem Seitentyp, einem Datenfeld, einer Tabelle oder einem mehrere Datenfelder umfassenden Bereich entsprechendes Element zugeordnet werden.

Im zweiten Aspekt der Erfindung wird das Vorlagedokument zeilen- und spaltenweise dargestellt, wobei der Markierungsbereich zeilen-und spaltenweise frei auswählbar ist.

Im zweiten Aspekt der Erfindung wird im Vorlagedokument ein Wiederholelement, wie z. B. ein Aufzählungspunkt in einer numerischen Aufzählung ausgewählt, das charakteristisch für eine in dem Vorlagedokument wiederkehrende Struktur, eine sogenannte Wiederholstruktur, ist und charakteristische Daten des Wiederholelements, insbesondere charakteristische formatbezogene Daten wie Zeilen- und/oder Spaltenposition innerhalb eines vorgegebenen Bereiches im Vorlagedokument und/oder ein Textinhalt manuell, teilautomatisch menügeführt oder automatisch erfasst. Mit den charakteristischen Daten kann dann eine Wiederholregel gebildet werden, mit der im Vorlagedokument und/oder im Eingangs-Dokumentendatenstrom alle zugehörigen Daten einer Wiederholstruktur erkannt werden können.

Zur Auswahl eines Elementes, wie z. B. eines Quelldatenfeldes oder eines Bereiches innerhalb des Vorlagedokuments, ist eine Zeigeeinrichtung, wie z. B. eine Maus oder ein Cursor, vorgesehen. Weiterhin können bei Betätigung einer ersten Taste, wie z. B. der rechten Maustaste der Eingabeeinrichtung, automatisch kontextbezogen zu diesem Element oder Bereich verfügbare Zuweisungsmöglichkeiten, wie z. B. das Strukturelement "Bereich" oder ein Wiederholelement, angezeigt werden. Abhängig von der Position einer solchen Zeigeeinrichtung und insbesondere vom Betätigen einer zweiten Taste einer solchen Eingabeeinrichtung im Vorlagedokument kann weiterhin automatisch mindestens ein zuordenbares Element und/oder mindestens ein zuordenbarer Bereich im Vorlagedokument hervorgehoben angezeigt werden. Dadurch wird die Benutzerfreundlichkeit des Verfahrens bzw. des Computerprogramm-Produkts weiter erhöht.

Wenn im Vorlagedokument ein mehrere Daten umfassender Wiederholbereich markiert wird, dann kann diesem insbesondere in Abhängigkeit einer von einer Bedienperson menügeführt getroffenen Auswahl ein der Auswahl entsprechendes Strukturelement, wie z. B. ein mehrere Datenfelder und insbesondere zu den Datenfeldern mehrere Einträge umfassendes Feld (ARRAY) zugeordnet werden. Wenn ein Feld (ARRAY) mehrere Datenfelder, z.B. für Rechnungsposten umfasst, dann enthält es insbesondere zu allen Datenfeldern gleich viele Einträge, nämlich zu jedem Rechnungsposten einen Eintrag in allen seinen Datenfeldern.

Für den markierten Bereich und/oder einen Wiederholbereich kann eine ENDE-Bedingung automatisch, teilautomatisch menügeführt oder manuell festgelegt werden. Als Strukturelement kann insbesondere ein Zweig in der Baumstruktur angelegt werden und ein dem Zweig entsprechendes Feld vom Typ ARRAY in der strukturierten Datendatei. Einem Zweig in der Baumstruktur sind insbesondere mehrere Datenfelder als untergeordnete Strukturelemente zugeordnet. Zur Erstellung und/oder Erweiterung der Baumstruktur können insbesondere wahlweise zuerst neue Datenfelder festgelegt werden und dann der übergeordnete Zweig zugeordnet werden oder zuerst der Zweig festgelegt werden und dann neue untergeordnete Datenfelder zugeordnet werden.

Ein Wiederholelement kann insbesondere durch ein oder mehrere Zeichen, eine Tabelle, eine Dokumentenzeile oder eine Dokumentenspalte gebildet werden. Das Wiederholelement kann im markierten Bereich liegen und insbesondere den gesamten markierten Bereich umfassen. Es kann vor oder nach dem Erstellen des zusammengehörigen Bereichs festgelegt werden. Anhand der strukturell charakteristischen Merkmale des Wiederholelements können automatisch Daten der Wiederholungsstruktur im Wiedervorlagedokument und/oder im Eingangs-Dokumentendatenstrom ermittelt und/oder markiert angezeigt werden. Wenn der Markierungsbereich Quelldatenfelder enthält und diese mit mindestens einem als Datenfeld ausgebildeten Strukturelement der Baumstruktur verknüpft werden, kann bei einer solchen Verknüpfung automatisch eine Regel erstellt werden zum Auslesen eines Quelldatenfeldes aus dem Eingangs-Dokumentendatenstrom und zum Abspeichern dessen Inhaltes in die strukturierte Datendatei in dem korrespondierenden Datenfeld.

Bei Festlegung einer Wiederholstruktur oder eines Wiederholelements in dem Vorlagedokument kann insbesondere automatisch oder manuell auswählbar entschieden werden, ob nachträglich ein der Wiederholstruktur oder dem Wiederholelement entsprechendes neues Strukturelement in einer bestehenden Baumstruktur hinzugefügt wird. Datenfelder der Baumstruktur, die der Wiederholstruktur zugeordnet sind, werden insbesondere dem neuen Strukturelement als Unterstrukturelemente zugeordnet.

Die Erfindung ermöglicht insbesondere, in dem Vorlagedokument mehrere Markierungsbereiche zu markieren, die insbesondere ebenenweise ineinander verschachtelt sind. Die Verschachtelung kann dabei insbesondere ebenenübergreifend erfolgen.

Zum Finden von Wiederholungsstrukturen kann zu dem Markierungsbereich eine insbesondere in zeilen- und/oder spaltenweisen Positionskoordinaten angegebene Fundregel erstellt werden, in der insbesondere ein Wiederholelement und/oder eine Wiederholbedingung angegeben sind. In Wiederholungsstrukturen tritt die im Markierungsbereich enthaltene Datenstruktur erneut im Vorlagedokument auf. Die Fundregel gibt an, an welchen Positionen Daten des Vorlagedokuments dem Markierungsbereich zuzuordnen sind. Eine Fundregel kann z. B. zum Inhalt haben, dass ein Punkt in einer bestimmten Spalte gesucht wird, dass eine Zeichenkette mit einem bestimmten Inhalt und/oder einer bestimmten Länge in bzw. ab einer bestimmten Zeile bzw. Spalte auftritt oder dergleichen.

Die Zuweisung des Strukturelements zur Markierung kann insbesondere automatisch unter Verwendung eines im Vorlagedokument vorhandenen Strukturelements, wie z. B. Angaben/Variablen des Typs Seitentyp (page type), Tabelle (table), Feld (field) oder Bereich (area), erfolgen.

Für einen markierten Bereich kann eine ENDE-Bedingung insbesondere automatisch erzeugt werden. Wenn zwei Bereiche ineinander verschachtelt sind und insbesondere ein zweiter markierter Bereich einem ersten markierten Bereich untergeordnet ist, dann kann die ENDE-Bedingung des übergeordneten zweiten Bereichs insbesondere automatisch für den ersten markierten Bereich übernommen werden. Weiterhin kann eine ENDE-Bedingung für einen markierten Bereich über eine datengetriebene Bedingung, insbesondere über eine Steuervariable oder eine von einer Bedienperson insbesondere menügeführt teilautomatisch festgelegte Bedingung erzeugt und/oder verändert werden. Eine solche Bedingung kann z. B. beinhalten, dass der markierte Bereich nach N Zeilen endet. Eine Bedienperson hat insbesondere teilautomatisch und insbesondere im Rahmen geltender gespeicherter systemimmanenter logischer Regeln über eine Menüführung über alle Regeln des Regelsatzes und/oder die Baumstruktur Erstellungs,- Änderungs- und Löschungsbefugnis.

Wenn gemäß einem bevorzugten Ausführungsbeispiel anhand der in der Baumstruktur erzeugten Strukturelemente innerhalb eines im ersten Fenster gleichzeitig oder nacheinander angezeigten Datenstroms, der zumindest ein vollständiges Vorlagedokument enthält, alle zu einem gemeinsamen Strukturelement gehörenden Bereiche des Datenstroms gleichartig, insbesondere mit gleicher Farbe, markiert werden, dann kann die Baumstruktur und die mit ihr zusammenhängenden Regeln vom Benutzer leicht und anschaulich überprüft werden. Zum Überprüfen des Regelsatzes für die im ersten Fenster dargestellten Daten werden die Regeln des Regelsatzes insbesondere auf diese Daten angewandt. Auch die Anwendung der Regeln an den im ersten Fenster dargestellten Daten kann insbesondere grafisch veranschaulicht werden. In den im ersten Fenster dargestellten Daten können dabei Bereiche verschiedener Ebenen und/oder Typen verschieden, insbesondere mit verschiedenen Farben, markiert werden.

Zur Überprüfung der Korrektheit eines Strukturelements kann insbesondere ein in der Baumstruktur des zweiten Fensters angezeigtes Strukturelement ausgewählt werden und automatisch alle im ersten Fenster dargestellten Bereiche, die diesem Strukturelement zugeordnet sind, angezeigt werden. In einem weiter verbesserten Ausführungsbeispiel werden zu einem im zweiten Fenster ausgewählten Strukturelement automatisch die ebenenweise übergeordneten und/oder untergeordneten, dem Strukturelement zugeordneten Strukturelemente oder der hierarchischen Ordnung entsprechende Symbole angezeigt. Die Erfindung wird nachfolgend beispielhaft anhand der beigefügten Zeichnungen näher erläutert. Die Zeichnungen zeigen in:
- Figur 1: ein Hochleistungsdrucksystem,
- Figur 2: schematisch die Zuordnung von Quelldatenbereichen und Quelldatenfeldern in einem Eingangsdokument auf Oberbegriffe und Datenfelder in der Baumstruktur,
- Figur 3: schematisch Daten eines Eingangsdokumentes, die zum Detektieren eines Seitentypes geeignet sind,
- Figur 4: schematisch Daten eines Eingangsdokumentes, die zum Detektieren von Dokumentengrenzen geeignet sind,
- Figur 5: zu extrahierende Daten eines Eingangsdokumentes, die innerhalb von Quelldatenbereichen und auch außerhalb von Quelldatenbereichen angeordnet sein können,
- Figur 6: schematisch ein Eingangsdokument, in dem bei absoluter Adressierung von Quelldatenfeldern möglicherweise auftretende Probleme dargestellt sind,
- Figur 7: ein Eingangsdokument, bei dem bestimmte Quelldatenbereiche mittels Anfangspositionselementen adressiert sind,
- Figur 8: ein Ausschnitt eines Ausgangsdokuments,
- Figur 9: ein Ausschnitt des Eingangsdokuments der Datei "Lieferschein.txt", nämlich die Seiten 1, 2 und 6 bis 8,
- Figur 10: eine Bildschirmdarstellung für eine erste Seite eines Vorlagedokuments und eine entsprechende Baumstruktur und
- Figur 11: eine Bildschirmdarstellung entsprechend der Figur 10 mit einer Folgeseite des Vorlagedokuments.

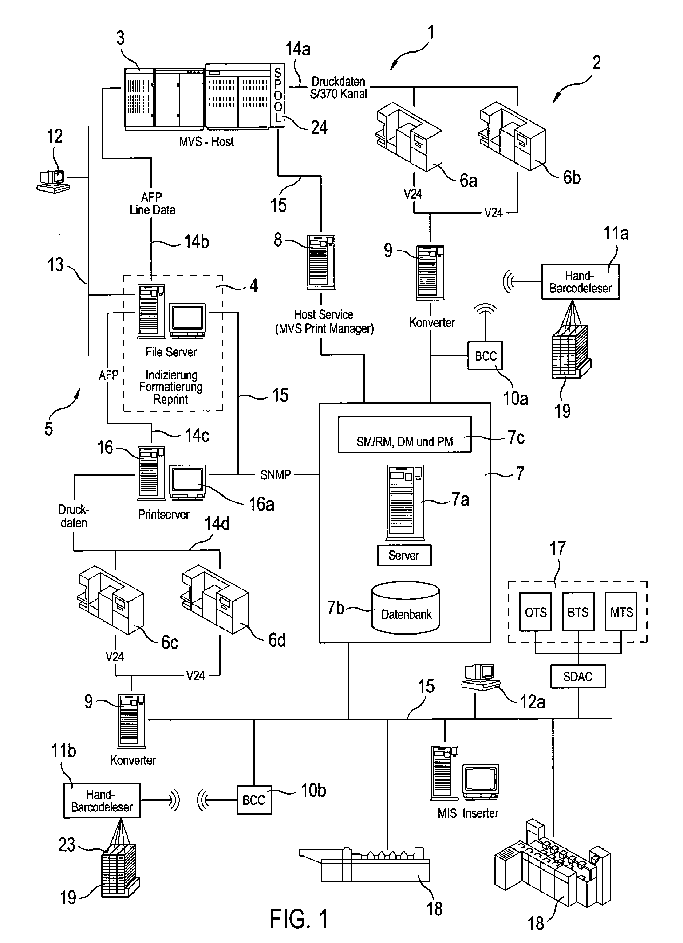

In Figur 1 ist ein Dokumenten-Druckproduktionssystem 1 gezeigt, das zum einen eine Main-Frame-Architektur 2 umfasst und zum anderen eine Netzwerk-Architektur 5, in denen jeweils Dokumentendaten bzw. Dokumentendruckdatenströme mittels Anwenderprogrammen (Tools) erzeugt werden. In der Main-Frame-Architektur 2 werden diese Druckdaten von einem Host-Computer zum Beispiel als Zeilendruckdatenstrom (ASCII-Line Data), erzeugt. Vom Host-Computer 3 können die Druckdaten wahlweise über einen sog. S/370-Kanal 14a direkt an ein oder mehrere Druckgeräte 6a, 6b übertragen werden. Alternativ zu diesem Ausgabekanal können die Druckdaten auch vom Host-Computer 3 über ein Netzwerk 13 oder eine direkte Datenverbindung 14b zu einem Bearbeitungscomputer 4 übertragen werden, in dem die Druckdaten zwischengespeichert (z.B. einem zugehörigen File Server) und für nachfolgende Ausgabeschritte bearbeitet werden. In derartigen Host-Computern 3 werden insbesondere Druckdatenströme erzeugt, die aus größeren Datenbeständen (Datenbanken) regelmäßig Listen-Ausdrucke, Rechnungen, Verbrauchsübersichten (für Telefonrechnungen, Gasrechnungen, Bankkonten) etc. zusammenstellen. Derartigen Anwendungen sind häufig bereits seit vielen Jahren im Einsatz und werden nach wie vor in mehr oder weniger unveränderter Weise benötigt (sog. Legacy-Anwendungen).

Innerhalb der Main-Frame-Architektur 2 wird der Druckproduktionsablauf von einem Überwachungssystem 7 überwacht. Es umfasst einen Überwachungscomputer 7a, der mit einer Datenbank 7b gekoppelt ist und verschiedene Computerprogrammmodule 7c enthält.

Das Überwachungssystem 7 ist über ein Gerätesteuerungsnetzwerk 15 und ein Print Manager-Modul 8 mit dem Host-Computer 3 verbunden, sowie über einen Konverter 9 mit z.B. einer V24-Datenleitung, die an die beiden Druckgeräte 6a, 6b ankoppeln. Der Konverter 9 setzt die V24-Signale in DMT-Protokollsignale des Gerätesteuerungsnetzwerkes 15 um. SNMP-Protokollsignale können einem Device-Manager DM als DMT-Protokollsignale umgesetzt bereit gestellt werden bzw. direkt als SNMP-Protokollsignale übergeben werden.

Druckgut 19, das in den Druckern 6a, 6b aus dem Dokumenten-Druckdatenstrom erzeugt wurde und auf dem Barcodes aufgedruckt sind, kann jeweils mit einem manuell bewegbaren, funkgesteuerten Barcodeleser 11a abgescannt werden. Signale werden per Funk an die Lesestation 10a übertragen und in das Gerätesteuerungsnetzwerk 15 bzw. an das Überwachungssystem 7 übermittelt.

In der Netzwerk-Architektur 5 werden Dokumentendaten mittels Anwenderprogrammen in Client-Computern 12, 12a erzeugt, die über ein Client-Netzwerk 13 untereinander sowie mit dem Bearbeitungscomputer (File-Server) 4 verbunden sind. Der File-Server dient damit als zentrale Verarbeitungs- und Bearbeitungsschnittstelle für Druckdaten des gesamten Druckproduktionssystems 1. Auf ihm laufen diverse Steuerungsmodule (Softwareprogramme), durch die der gesamte Druckproduktionsablauf bzw. die gesamte Dokumentenbearbeitung anwendungsspezifisch, produktionstechnisch und gerätesteuerungsseitig an die jeweiligen Gegebenheiten optimal angepasst wird. Aus der WO 2004/040432 ist es bekannt, dass am File-Server insbesondere folgenden Funktionen ausgeführt werden:
- converting, indexing, sorting
- Einfügen von Steuerungsinformationen
- Datenreduktion
- Extraktion zur Erzeugung eines komprimierten Datenstroms, insbesondere zur Überwachung der beteiligten Geräte in Echtzeit,
- Wiederholungsdruck (reprint)

In der WO-A1-2004/040432 sind diese Funktionen näher erläutert.

Druckdaten, die vom Bearbeitungscomputer 4 fertiggestellt wurden, werden über die Druckdatenleitung 14c an einen Druckserver 16 geleitet. Dessen Aufgabe ist es im wesentlichen, den Bearbeitungscomputer 4 zu entlasten. Der Druckserver 16 weist einen Bildschirm 16a auf. Der Druckserver 16 ist in erster Linie aus Gründen der Performance (Geschwindigkeit) im Gesamtsystem integriert. Bei Systemen, deren Druckgeschwindigkeit weniger groß ist, kann auf den Druckserver 16 auch verzichtet werden.

Die gedruckten Dokumente werden auf ihrem Verarbeitungsweg zwischen dem Druckgerät 6 und einem Nachbearbeitungsgerät 18 hinsichtlich verschiedener Kriterien mit einem Testsystem 17 getestet, nämlich durch ein optisches Testsystem hinsichtlich ihrer optischen Druckqualität, mit einem Barcode-Testsystem hinsichtlich ihres Vorhandenseins, ihrer Konsistenz und/oder ihrer Reihenfolge sowie mit einem MICR-Testsystem, sofern der Druck mittels magnetisch lesbarem Toner (magnetic ink character recognition toner) gedruckt wurde. Die vom Testsystem 17 gelieferten Daten werden von einem seriellen Datenerfassungsmodul an das Gerätesteuerungsnetz 15 übermittelt und dem Überwachungssystem 7 zugeführt.

Das erfindungsgemäße Verfahren zum Umwandeln eines Eingangs-Dokumentendatenstroms mit einem oder mehreren Dokumenten in eine strukturierte Datendatei zur Erzeugung eines Ausgangs-Dokumentendatenstroms kann auf dem Host-Computer 3 ausgeführt werden, an dem der Eingangs-Dokumentendatenstrom erzeugt wird. Zweckmäßiger ist es jedoch, das erfindungsgemäße Verfahren zum Umwandeln eines Eingangs-Dokumentendatenstroms in eine strukturierte Datendatei an einem dem Host-Computer nachgeschalteten Rechner, wie z.B. dem File-Server 4 oder dem Druckserver 16 auszuführen, da hierdurch in das bisherige System, das eine große Menge sensitiver Daten verarbeitet, nicht eingegriffen werden muss.

Mit dem erfindungsgemäßen Verfahren wird ein Eingangs-Dokumentendatenstrom mit einem oder mehreren Dokumenten in eine strukturierte Datendatei zur Erzeugung eines Ausgangs-Dokumentendatenstroms umgewandelt. Eine aus einem Eingangs-Dokumentendatenstrom erzeugte strukturierte Datendatei ist in der deutschen Patentanmeldung 10 2004 021 269.4 beschrieben, die den Titel "Verfahren, Vorrichtung und Computerprogramm zum Erzeugen eines seiten- und/oder bereichsstrukturierten Datenstroms aus einem Zeilendatenstrom" trägt.

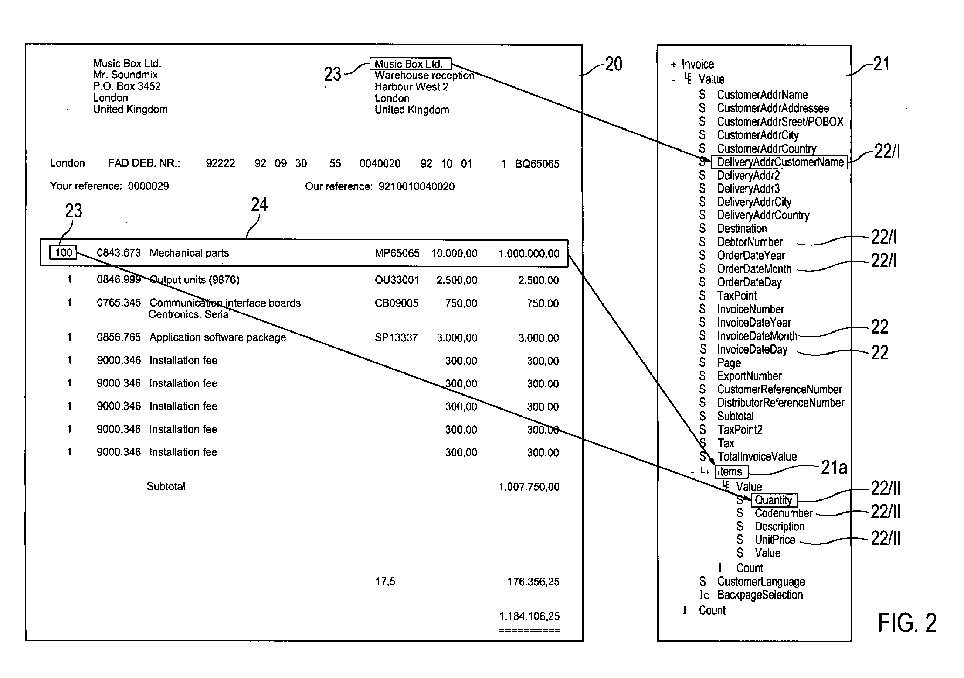

Figur 2 zeigt einen Ausschnitt eines Vorlagedokumentes 20 sowie einen Ausschnitt einer Baumstruktur 21 mit Datenfeldern 22.

Das Vorlagedokument 20 ist ein Dokument, das so formatiert ist wie die Dokumente eines zu bearbeitenden Eingangs-Dokumentendatenstroms.

Dieses Vorlagedokument 20 und der entsprechende Eingangs-Dokumentendatenstrom stellen einen Zeilendatenstrom dar, der auch Zeilendaten basierter Druckdatenstrom genannt wird. Ein solcher Zeilendatenstrom umfasst lediglich Zeichen, die mittels einer oder mehrerer Zeichentabellen (Code pages) codiert (ASCII, EBCDIC, Unicode, DBCS, ...) sind und Zeilenumbrüche und Seitenumbrüche umfassen. Sie können auch noch weitere Formatierungselemente umfassen. Derartige Zeilendatenströme sind im digitalen Druckbereich vielfach verbreitet und insbesondere als Advanced Function Presentation Datenstrom (AFP) Line data stream, der von der International Machine Corporation (IBM) entwickelt wurde oder als Line coded data stream (LCDS), der von der Xerox Corporation entwickelt wurde, ausgebildet. Die Zeilen- und Seitenumbrüche können durch eine bestimmte Zeichenfolge am Zeilenende bzw. Seitenende, Steuerzeichen am Zeilen- bzw. Seitenanfang oder durch eine fest definierte Zeichenzahl innerhalb einer Zeile bzw. Zeilenzahl innerhalb einer Seite festgelegt sein.

Für das vorliegende Ausführungsbeispiel ist wesentlich, dass die Formatierung, d.h. die Anordnung der einzelnen Zeichen im Dokument, lediglich durch die Position des einzelnen Zeichens in einer Zeile, Zeilenumbrüche und Seitenumbrüche bestimmt wird. Bei derartigen Dokumenten wird eine nicht proportionale Schrift verwendet, wie z.B. Courier, bei der der Mittenabstand zweier benachbarter Zeichen immer identisch unabhängig von der Art des jeweiligen Zeichens ist.

Die Baumstruktur 21 ist eine vom Benutzer editierbare Datei, die zumindest für ein Dokument (hier: "Invoice") alle Datenfelder 22 in einer strukturierten Anordnung enthält. Die Datei Baumstruktur dient als Vorlage zum Erzeugen einer strukturierten Datendatei. Dies bedeutet, dass in der Datei Baumstruktur keine aus dem Eingangs-Dokumentendatenstrom extrahierten Daten gespeichert werden, sondern in der strukturierten Datendatei werden die aus dem Eingangs-Dokumentendatenstrom extrahierten Daten in der gleichen Struktur wie in der Datei Baumstruktur gespeichert, wobei den extrahierten Daten die Bezeichnung des korrespondierenden Datenfeldes der Baumstruktur als Typ-Deklaration zugeordnet wird.

Die Baumstruktur des vorliegenden Ausführungsbeispiels ist zunächst in zwei Äste unterteilt, die mit "Value" bzw. "Count" bezeichnet sind. Der Zweig "Count" enthält lediglich ein einziges Datenfeld, das als "Count" bezeichnet wird und in dem in der strukturierten Datendatei die Nummer des Dokumentes innerhalb eines Eingangs-Dokumentendatenstroms abgespeichert wird. So ist es möglich, dass in einer strukturierten Datendatei Daten mehrerer Dokumente strukturiert abgespeichert werden können. Im Zweig "Value" sind die Datenfelder enthalten, in die die aus dem Eingangs-Dokumentendatenstrom zu extrahierenden Daten geschrieben werden. Eine Reihe von Datenfeldern 22/I sind in der Baumstruktur unmittelbar unter dem Oberbegriff "Value" angeordnet. Diese Datenfelder 22/I dienen zum Abspeichern eines Datums des Eingangs-Dokumentendatenstroms, das in jedem Dokument lediglich ein einziges Mal auftritt. In dem vorliegenden Beispiel lautet der Name der Lieferadresse im Vorlagedokument 20 "Music Box Ltd", der auf das Datenfeld "DeliveryAddrCustomerName" abgebildet wird, d.h. dass in der strukturierten Datendatei dieser Name der Lieferadresse an der entsprechenden Stelle gespeichert und mit der Typ-Deklaration "DeliveryAddrCustomerName" versehen wird.

In der Strukturebene, die die Datenfelder 22/I enthält, ist ein weiterer Zweig enthalten, der als "Items" bezeichnet ist. Dieser Zweig ist wiederum in einen Zweig "Value" und in einen Zweig "Count" verzweigt. Diese untergeordneten Zweige dienen dazu, Gruppen von Datenfeldern 22/II zu strukturieren, auf die mehrfach Daten eines einzelnen Dokumentes abgebildet werden. So ist im vorliegenden Beispiel das Dokument eine Rechnung, in der mehrere abzurechnende Gegenstände (items) aufgeführt sind, für welche jeweils die Datenmenge, Codenummer, Beschreibung, Einzelpreis und Wert im Dokument enthalten sind. Für einen jeden solchen Gegenstand muss in der strukturierten Datendatei ein entsprechender Satz Datenfelder erzeugt werden, in den die jeweiligen Werte abgespeichert werden. Die Anzahl dieser Sätze von Datenfeldern wird im Datenfeld "Count" abgespeichert, das dem Oberbegriff "Items" untergeordnet ist.

Mit dem erfindungsgemäßen Verfahren werden aus dem Eingangs-Dokumentendatenstrom Daten gemäß einem vorbestimmten Regelsatz extrahiert und in die strukturierte Datendatei gespeichert, wobei der Regelsatz derart ausgebildet ist, dass beliebige Daten aus dem Eingangs-Dokumentendatenstrom auf ein beliebiges Datenfeld der strukturierten Datendatei abbildbar sind.

Zum Erzeugen eines solchen Regelsatzes werden Mittel bereit gestellt, mit welchen im Vorlagedokument Quelldatenfelder 23 und Quelldatenbereiche 24 definiert werden können. In Figur 2 sind zur Vereinfachung der Darstellung lediglich zwei Quelldatenfelder 23 und ein Quelldatenbereich 24 gezeigt.

Der Inhalt der Quelldatenfelder 23 wird auf die Datenfelder 22 abgebildet und Quelldatenbereiche 24 können - müssen aber nicht - Oberbegriffen, das heißt Datenfeldern übergeordneten Strukturelementen in der Baumstruktur 21 entsprechen. Aber für jeden Oberbegriff der Baumstruktur 21 auf dessen Datenfelder 22/II Daten mehrfach abgebildet werden, muss im Vorlagedokument ein entsprechender Quelldatenbereich 24 vorgesehen sein, der dann im tatsächlichen Dokument eines Eingangs-Dokumentendatenstroms ein- oder mehrfach zur Abbildung der Daten verwendet wird.

Wird im Eingangs-Dokumentendatenstrom innerhalb eines Dokumentes ein Quelldatenbereich 24 mehrfach erkannt, so wird in der strukturierten Datendatei entsprechend oft ein Datensatz als Instanz mit den entsprechenden Datenfeldern erzeugt. Der diesen Quelldatenbereich definierende Regelsatz wird somit mehrfach auf das jeweilige Dokument angewandt, um Daten zu extrahieren und in der strukturierten Datendatei abzuspeichern.

Die Quelldatenfelder 23 und die Quelldatenbereiche 24 werden im Vorlagedokument beispielsweise durch Markieren der entsprechenden Zeichenfolge bzw. des entsprechenden Bereiches definiert. Dieses Markieren kann grafisch durch das Aufziehen von Kästchen, wie es in Figur 2 gezeigt ist, mittels einer Computermaus erfolgen. Das Markieren dieser Quelldatenfelder 23 bzw. Quelldatenbereiche 24 kann auch, wie es von Textverarbeitungsprogrammen bekannt ist, durch Markieren der entsprechenden Zeichen im Vorlagedokument mittels Drücken einer vorbestimmten Taste und Betätigen einer entsprechenden Pfeil-Taste einer Tastatur erfolgen. Für die Erfindung ist wesentlich, dass ein Benutzer beliebige Zeichenfolgen als Quelldatenfelder 23 im Vorlagedokument markieren kann und Bereiche, die ein oder mehr Quelldatenfelder 23 enthalten, als Quelldatenbereiche 24 markieren kann.

Das Markieren eines Quelldatenfeldes 23 bzw. eines Quelldatenbereichs 24 kann computerunterstützt insbesondere auch dadurch erfolgen, dass abhängig von der Position eines Cursors oder eines Mauszeigers im Vorlagedokument automatisch das dem Cursor bzw. Mauszeiger nächstgelegene Quelldatenfeld 23 und/oder ein nächstgelegener Quelldatenbereich 24 in geeigneter Weise hervorgehoben wird, beispielsweise durch Anzeigen des Quelldatenfeldes 23 bzw. des Quelldatenbereichs 24 in einer Hervorhebungsfarbe. Diese Hervorhebung kann entweder automatisch in Abhängigkeit von der Position der Zeigeeinrichtung (Cursor, Maus) erfolgen oder teilautomatisch bei betätigen einer entsprechenden Taste, wie z. B. einer rechten Maustaste oder einer Funktionstaste auf einer Tastatur.

Beim Erzeugen der Regeln erfolgt die Zuordnung der Quelldatenfelder 23 auf die korrespondierenden Datenfelder 22 beispielsweise durch aufeinanderfolgendes Anklicken eines Quelldatenfeldes 23 und eines korrespondierenden Datenfeldes 22 mit der Computermaus oder durch Ziehen einer insbesondere imaginären, d.h. nicht am Bildschirm angezeigten Verbindungslinie. Eine solche Zuordnung kann selbstverständlich auch über die Tastatur eingegeben werden und/oder kontextbezogen bzw. menügeführt sein. Dabei kann abhängig von der Position einer Cursor- bzw. Mauszeigeeinrichtung und insbesondere vom Betätigen einer zweiten Taste auf der Tastatur bzw. Maus automatisch ein dem Quelldatenfeld 23 bzw. dem Quelldatenbereich 24 entsprechendes Strukturelement für die Baumstruktur 21 angezeigt und zur Auswahl angeboten werden.

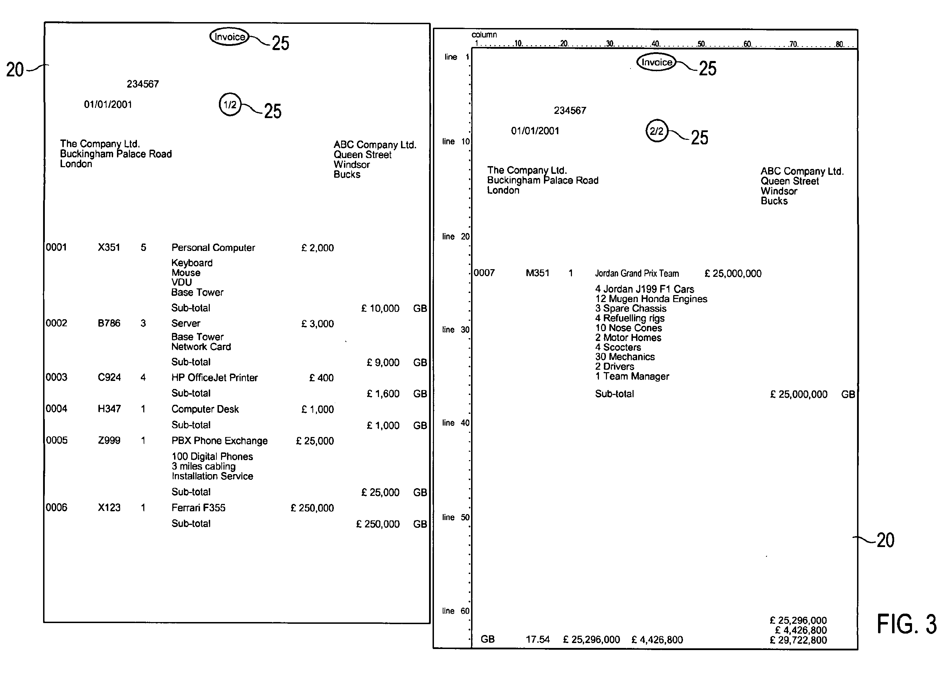

Das erfindungsgemäße Verfahren arbeitet seitenweise, d.h. dass zum Umwandeln einer bestimmten Seite jeweils ein bestimmter Regelsatz herangezogen werden muss. Damit die Auswahl des jeweiligen Regelsatzes automatisch erfolgen kann, sind bei der Erzeugung desselben eine oder mehrere Bedingungen anzugeben, die einen bestimmten Regelsatz jeweils einer bestimmten Seite eines Dokumentes zuordnen. Figur 3 zeigt zwei Seiten eines Vorlagedokumentes, die in ihrer Kopfzeile jeweils den Begriff "Invoice" enthalten, wobei ein paar Zeilen unterhalb die Seitennummer und die Gesamtzeilenzahl jeweils getrennt durch einen "/" angeordnet sind. Diese Elemente stellen Seitentypfelder 25 dar, die wie die Quelldatenfelder 23 im Vorlagedokument vom Benutzer definierbar sind. Gibt es z.B. für Rechnungen drei Regelsätze, einen für die erste Seite, einen für die letzte Seite und einen für weitere Seiten, so würden die Bedingungen für die erste Seite lauten, enthält die Seite in einem Seitentypfeld 25 das Datum "Invoice" und in einem weiteren Seitentypfeld die Seitennummer "1", so verwende den Regelsatz für die erste Seite. Die Bedingungen für die letzte Seite würden lauten, dass eines der Seitentypfelder 25 das Datum "Invoice" enthalten muss und dass in einem weiteren Seitentypfeld 25 die Seitenzahl und die Gesamtseitenzahl enthalten sind und wenn beide gleich sind handelt es sich um die letzte Seite, so dass der korrespondierende Regelsatz herangezogen werden muss. Weiterhin ist es möglich, entsprechende zeichen- und/oder strukturbezogene Funktionen für Bereiche vorzusehen mit denen eine Regel oder ein Regelsatz erzeugt, angewandt und/oder verändert wird. Bei der Anwendung einer Exchange-Funktion könnte ein Regelsatz verändert werden oder ein anderer Regelsatz angewandt werden, wenn sich innerhalb eines Bereiches der Inhalt wie z.B. ein Zeichen oder eine Zeichenfolge eines Quelldatenfeldes gegenüber dem entsprechenden Quelldatenfeld desselben, Bereiches der bisher verarbeiteten Eingangs-Dokumentendaten verändert hat. Bei der Anwendung einer Contain-Funktion könnte ein vorbestimmter Regelsatz für einen Bereich verwendet werden, wenn ein Zeichen oder eine Zeichenfolge eines bestimmten Quelldatenfeldes einen bestimmten Inhalt hat. Es lassen sich natürlich ohne weiteres noch andere mögliche Funktionen angeben.

Mit dem Verfahren gemäß dem zweiten Aspekt der Erfindung werden ein Computerprogramm-Produkt und ein System mit insbesondere grafischen Mitteln zum Eingeben derartiger Bedingungen bereitgestellt. Diese Mittel umfassen ein Fenster auf der graphischen Benutzeroberfläche, in dem Inhalte von Seitentypfeldern 25 mittels logischer Verknüpfung verknüpfbar sind. Ist das logische Ergebnis der Verknüpfung "wahr" so bedeutet dies, dass dieser Regelsatz für die jeweilige Seite heranzuziehen ist. Die Mittel zum Eingeben der Bedingungen umfassen vorzugsweise auch typische logische Verknüpfungsstrukturen wie z.B. den Vergleich der Seitenzahl mit der Gesamtseitenzahl, wobei diesen Verknüpfungsstrukturen dann lediglich nur noch die entsprechenden Seitentypfelder 25 zuzuordnen sind, die alleine oder in Verbindung mit weiteren logischen Verknüpfungen einsetzbar sind. Weiterhin können die Mittel zum Eingeben von Bedingungen für Wiederholstrukturen und/oder Regeln des Regeldatensatzes Zeichenfunktionen umfassen, wie z. B. die Funktion CONTAIN, mit der in einem Quelldatenfeld oder Quelldatenbereich eine bestimmte Zeichenfolge gesucht wird oder die Funktion EXCHANGE, mit der überprüft wird, ob sich in einem Quelldatenfeld und/oder Quelldatenbereich ein bestimmter Datenwert gegenüber einem entsprechenden, bisher geltenden Datenwert verändert hat. Die zuletzt genannte Funktion ist insbesondere bei der Abarbeitung von Folgeseiten und/oder Wiederholstrukturen nützlich.

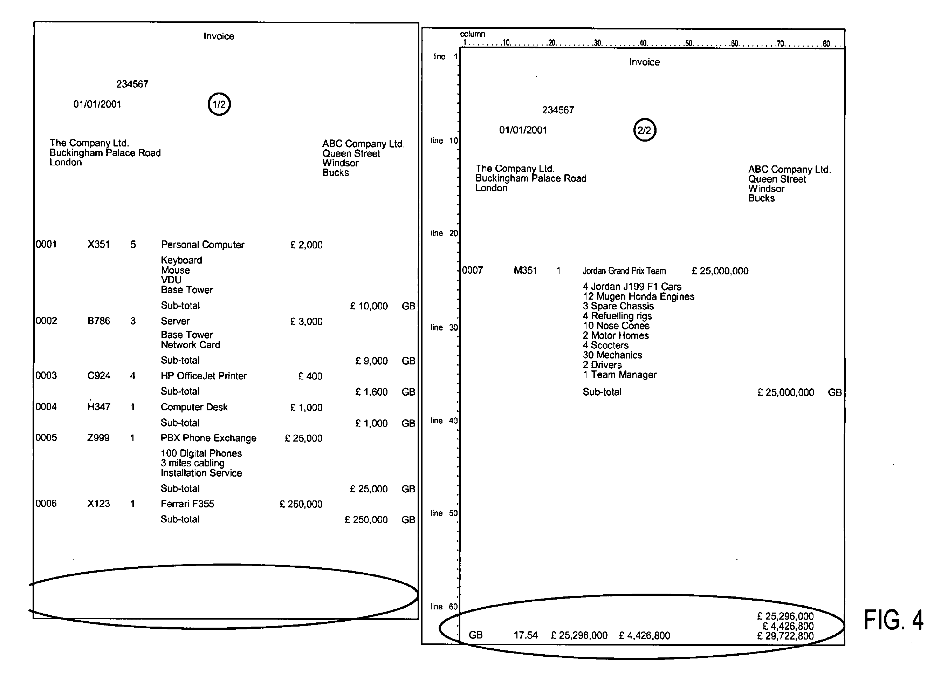

Da ein Eingangs-Dokumentendatenstrom mehrere Dokumente enthalten kann und eine strukturierte Datendatei für ein jedes Dokument einen vollständigen Satz Datenfelder enthalten soll, ist es zweckmäßig, den Anfang und das Ende eines jeden Dokumentes zu ermitteln, damit bei der Umwandlung automatisch der Anfang und das Ende eines Dokumentes erkannt werden. Hierzu werden Dokumentenbegrenzungsfelder 26 definiert (Figur 4) und Dokumentenbegrenzungsbedingungen eingegeben. Die Dokumentenbegrenzungsfelder sind typischerweise typische Elemente eines Briefkopfes, Seitenzahlen, oder Abschlusselemente bei Rechnungen oder dergleichen. Die Dokumentenbegrenzungsfelder 26 können die gleichen Daten wie die Seitentypfelder 25 oder die Quelldatenfelder 23 betreffen. Von diesen weiteren Feldern unterscheiden sie sich dadurch, dass sie in Bedingungen zum Bestimmen des Anfangs bzw. des Endes eines Dokumentes verwendet werden. Diese Bedingungen können gleichermaßen eingegeben werden wie die Bedingungen zum Bestimmen des Seitentyps.

Bei der Festlegung von ENDE-Bedingungen für ineinander verschachtelte und/oder hierarchisch strukturierte Bereiche ist es insbesondere nützlich, die ENDE-Bedingung eines ersten Bereichs vollständig an die ENDE-Bedingung eines zweiten Bereiches zu koppeln, insbesondere die ENDE-Bedingung eines untergeordneten Bereiches an die ENDE-Bedingung eines übergeordneten Bereiches zu koppeln.

Innerhalb eines Eingangs-Dokumentendatenstroms können auch unterschiedliche Dokumententypen, wie z.B. Mahnungen, Lieferscheine, Rechnungen, etc., enthalten sein. Die Regelsätze der einzelnen Dokumententypen können derart ausgebildet sein, dass für einen jeden Dokumententyp eine separate strukturierte Datendatei erzeugt wird. Die Daten unterschiedlicher Dokumententypen können auch in einer gemeinsamen strukturierten Datendatei abgespeichert werden.

Die Quelldatenfelder können in Zeilendatenströmen grundsätzlich absolut adressiert werden, d.h. z.B. mittels der Zeilennummer, der Zeichennummer innerhalb der jeweiligen Zeile, und der Länge, d.h. der Anzahl der Zeichen. Eine derartige Adressierung ist einfach festlegbar und wird vom System automatisch übernommen, sobald ein Quelldatenfeld im Vorlagedokument definiert wird.

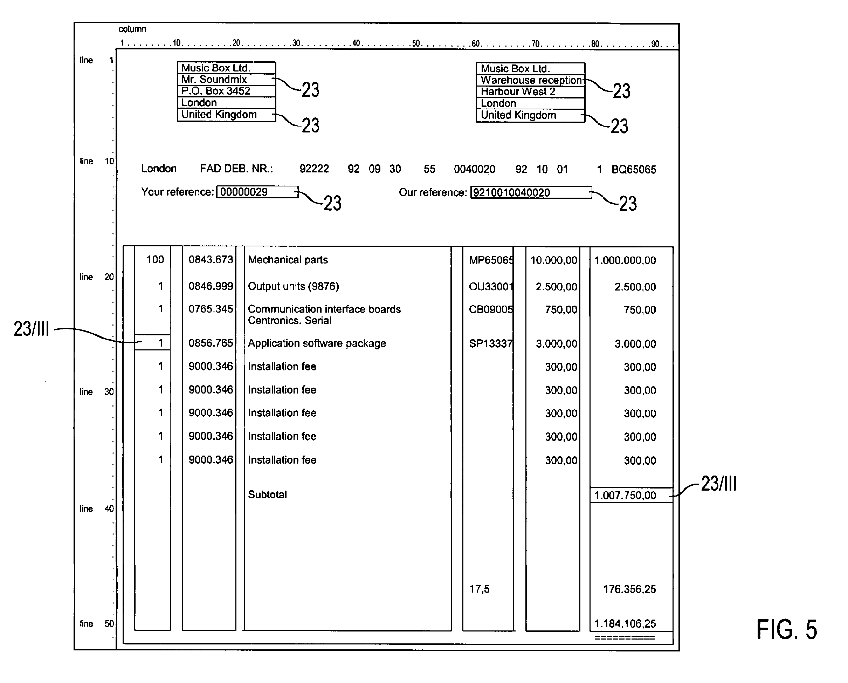

Figur 5 zeigt mehrere Quelldatenfelder 23, wobei auch zwei Quelldatenfelder 23/III dargestellt sind, die für eine solche absolute Adressierung nicht geeignet sind.

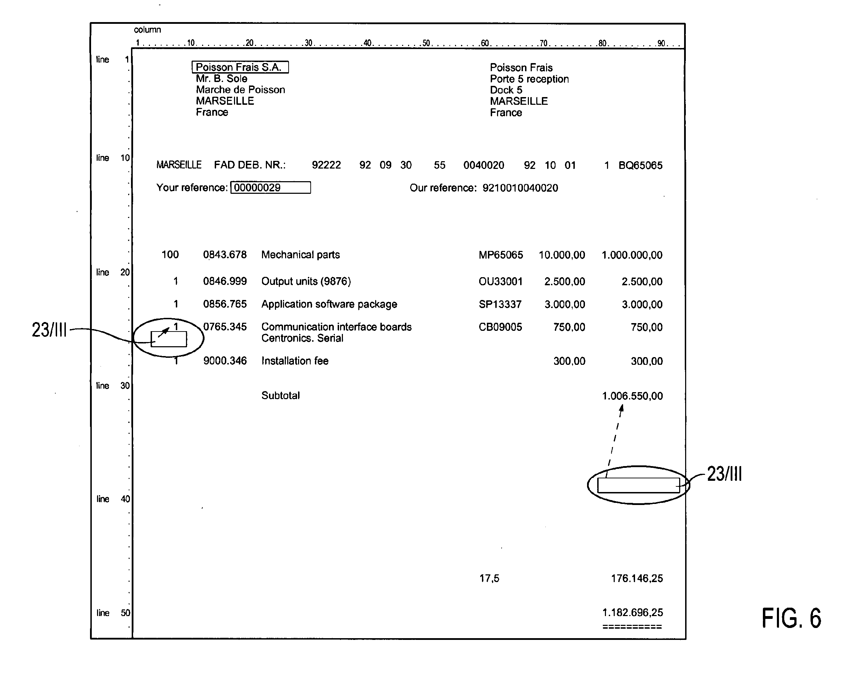

Figur 6 zeigt ein weiteres Dokument des Dokumententyps aus Figur 5, bei dem jedoch die Quelldatenfelder 23/III bezüglich der Daten, die sie auf die Datenfelder abbilden sollen, versetzt angeordnet sind. Dies beruht darauf, dass der Ort bestimmter Daten von im Dokument enthaltenen vorhergehenden Daten abhängig ist. So hat sich in Figur 6 z. B. die Angabe der Summe ("Subtotal") gegenüber dem Dokument aus Figur 5 verschoben, da weniger Gegenstände in dieser Rechnung enthalten sind, als dies im Vorlagedokument der Fall war.

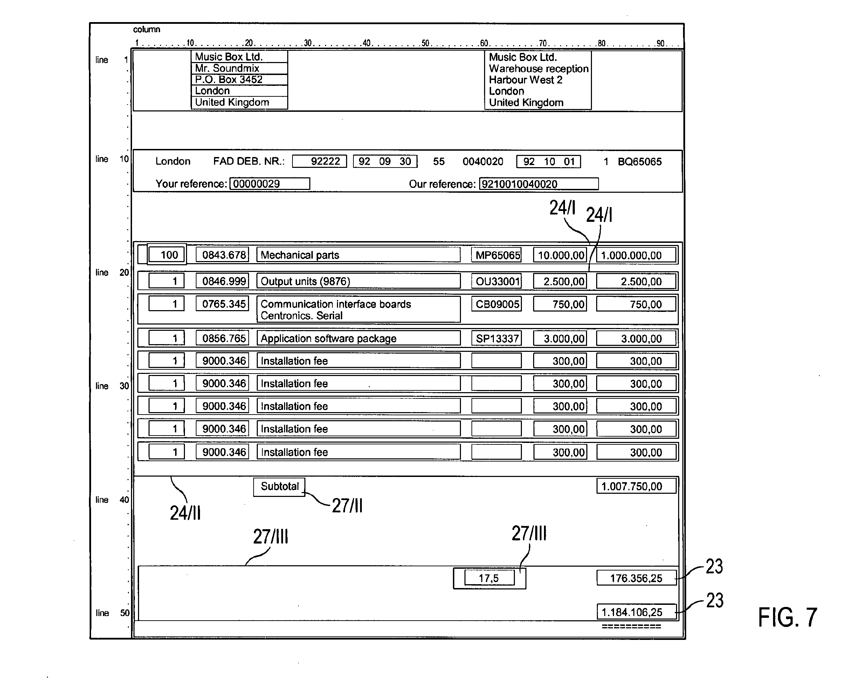

Zur Beseitigung dieses Problems werden Quelldatenbereiche 24 definiert, die jeweils ein Positionselement 27 enthalten, dessen Ort relativ definiert ist. Dieses Positionselement 27 ist typischerweise aber nicht notwendigerweise ein Quelldatenfeld 23. Bei dem in Figur 7 gezeigten Vorlagedokument ist für die einzelnen Gegenstände der Rechnung jeweils ein Quelldatenbereich 24 definiert. Innerhalb eines solchen Quelldatenbereichs 24 ist der erste Posten die Anzahl der entsprechenden Gegenstände, der immer eine ganze Zahl ist. Es kann deshalb eine Bedingung eingegeben werden, gemäß der der Quelldatenbereich 24 positioniert wird, die im vorliegenden Beispiel eine Zeichenfolge sucht, indem eine ganze Zahl gesucht wird und im Bereich der Zeichen (das heißt Spalten) 4 bis 8 einer Zeile angeordnet ist. Wird eine solche Zeichenfolge im Dokument gefunden, so wird dieser Quelldatenbereich 24 entsprechend positioniert. Innerhalb des Quelldatenbereichs sind die einzelnen Quelldatenfelder 23 absolut adressiert. Bei diesem Beispiel ist die Anzahl der Gegenstände nicht fest vorgegeben. Daher ist es möglich, dass dieser Quelldatenbereich 24 unterschiedlich oft anzuwenden ist. Es handelt sich hiermit somit um einen wiederholt anwendbaren Quelldatenbereich 24. Dies ist in der Bedingung entsprechend festzulegen.

Bei diesem Beispiel sind noch zwei weitere Quelldatenbereiche 24/II und 24/III aufgeführt, die relativ adressiert sind. Die Bedingung zum Auffinden des Quelldatenbereichs 24/II lautet: Wird an einer beliebigen Stelle auf der aktuell bearbeiteten Seite die Zeichenfolge "Subtotal" gefunden (CONTAIN-Funktion), so stellt sie ein Positions- und Wiederholelement des eine Wiederholstruktur bildenden Quelldatenbereichs 24/II dar, der die Zeile, in dem diese Zeichenfolge enthalten ist sowie alle weiteren Zeilen bis zur fünfzigsten Zeile umfasst.

Die Bedingung für den Quelldatenbereich 24/III lautet: Wird innerhalb des Quelldatenbereichs 24/II eine Zeichenfolge im Bereich des einundsechzigsten bis siebenundsechzigsten Zeichens einer Zeile gefunden, so umfasst der Quelldatenbereich 24/III diese Zeile und alle weiteren hierauf folgenden Zeilen innerhalb des Quelldatenbereichs 24/II. Die weiteren Quelldatenfelder 23 sind innerhalb der Quelldatenbereiche 24 adressiert. Die Adressierung kann sich auf einen beliebigen Bezugspunkt, wie z.B. die erste oder letzte Zeile innerhalb des Quelldatenbereichs 24 beziehen.

Die Quelldatenbereiche 24/II und 24/III treten innerhalb eines Dokuments lediglich einmal auf, das heißt sie sind keine Wiederholstrukturen, was bei der Erstellung der entsprechenden Bedingung zum Positionieren der Quelldatenbereiche 24 berücksichtigt werden kann.

Die mit einem solchen Regelsatz erstellbare strukturierte Datendatei enthält Daten, die z.B. wie in der Deutschen Patentanmeldung 10 2004 021 269.4 in Figur 12 dargestellt sind und seiten- und bereichsstrukturiert sind. Quelldatenfelder 23 können an beliebiger Stelle im Vorlagedokument beliebigen korrespondierenden Datenfeldern 22 in der Baumstruktur 21 zugeordnet werden.

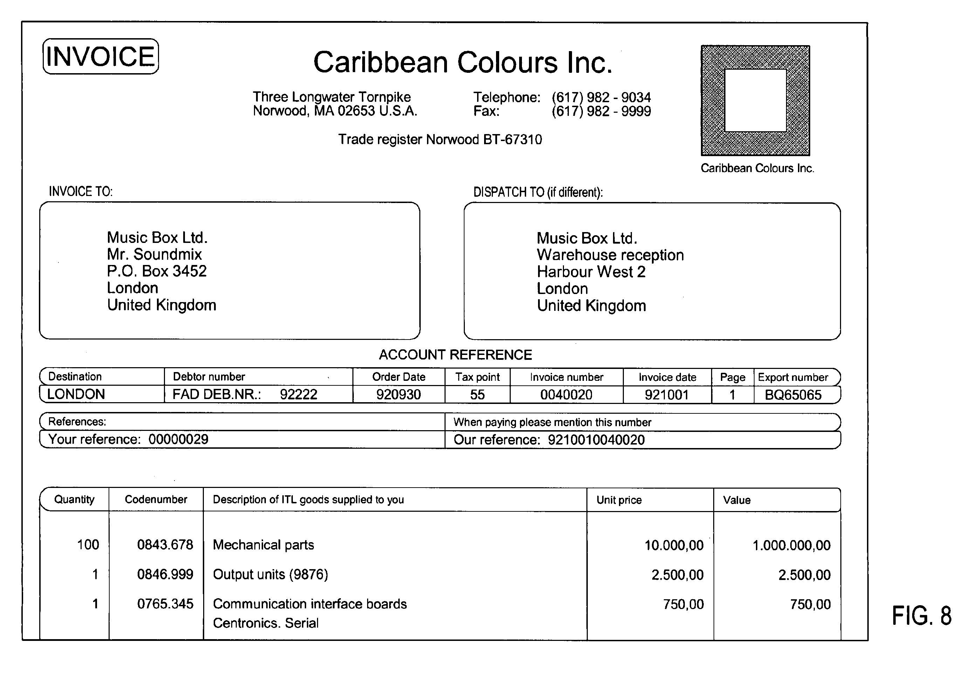

Die strukturierte Datendatei bildet somit eine Datenbank, deren Inhalt einfach und mit üblichen Mitteln ausgelesen und in beliebige Layouts bzw. Formulare eingetragen werden können. Die so erzeugten Ausgangsdokumente können beliebig formatiert sein und enthalten die im ursprünglichen Zeilendatenstrom aufgeführten Daten. Ein Ausschnitt eines solchen Ausgangsdokuments ist in Figur 8 gezeigt.

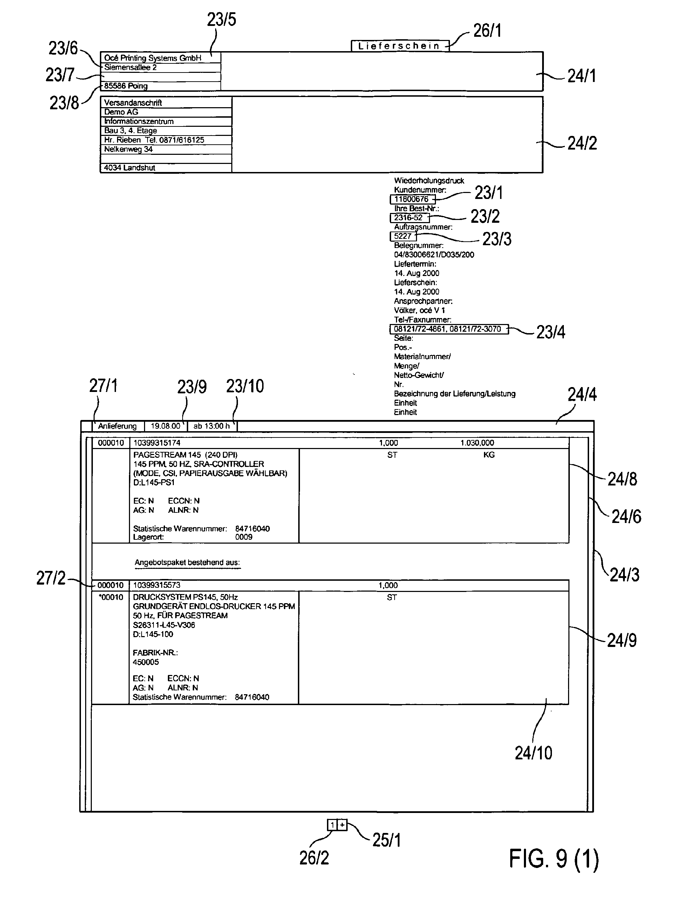

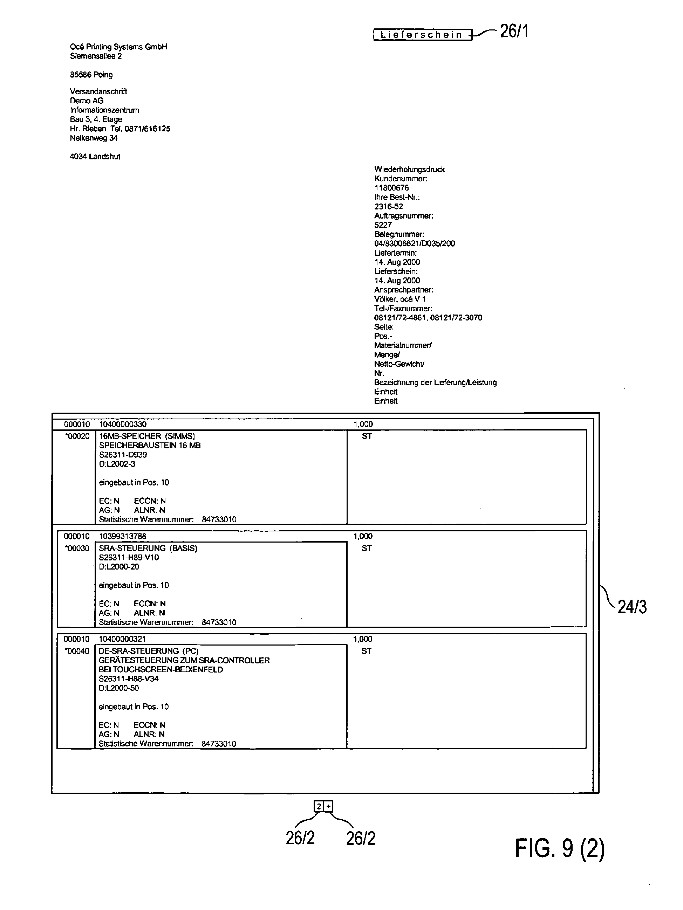

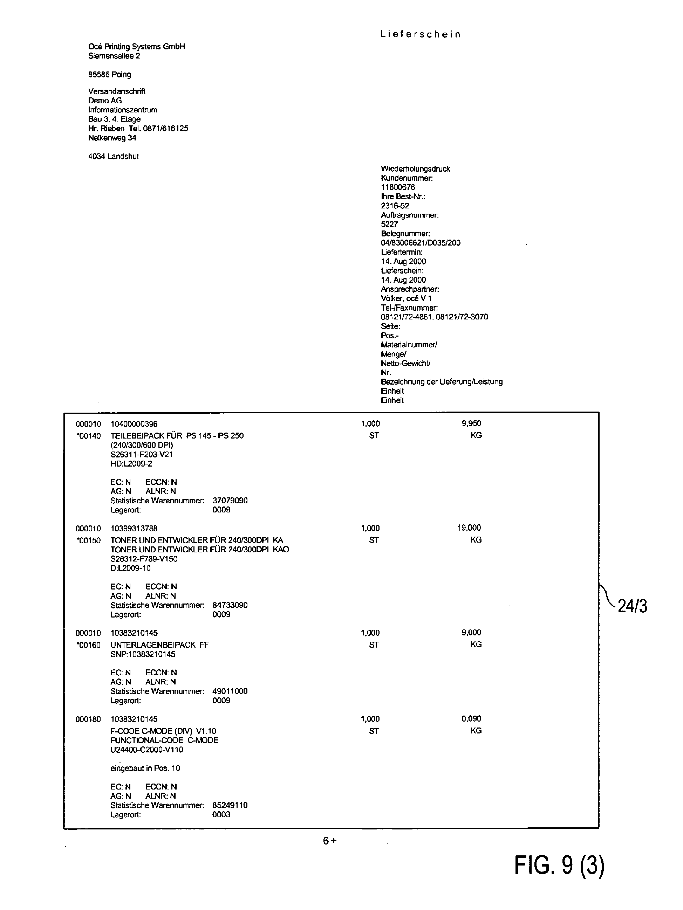

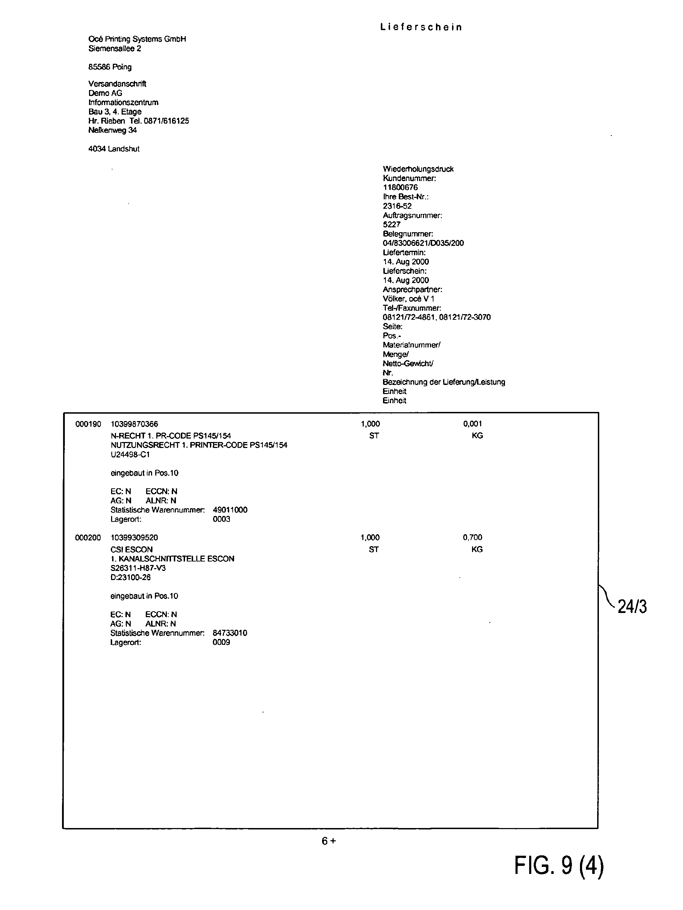

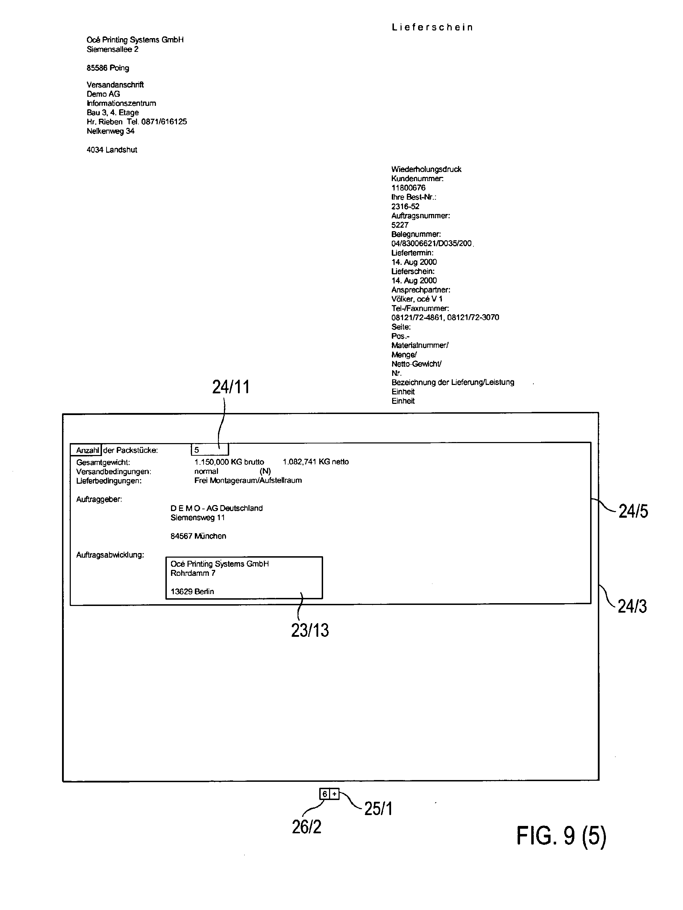

Nachfolgend werden die Regeln und Bedingungen zum Extrahieren der Daten des ausschnittsweise in Figur 9 gezeigten Dokumentes "Lieferschein" beispielhaft erläutert. Die einzelnen Regeln und Bedingungen enthalten die Baumstruktur der Abbildungs- bzw. Strukturelemente zum Extrahieren der Daten aus dem Dokument "Lieferschein".

Regeln und Bedingungen enthalten weiter die Baumstruktur, die als Vorlage zum Erzeugen der strukturierten Datendatei dient und der in Fig. 2 gezeigten Baumstruktur entspricht.

Die Baumstruktur der Abbildungselemente enthält die Quelldatenfelder und Quelldatenbereiche, gemäß welcher Daten aus den Dokumenten extrahiert werden.

Die Bedingungen und Regeln sind entsprechend der Baumstruktur der Abbildungselemente geordnet. Zunächst sind die Strukturelemente und Eigenschaften definiert, die im gesamten Dokument gelten, d.h., die sich auf das Abbildungselement "Dokument" beziehen.

Die Strukturelemente umfassen einer Wiederholstruktur entsprechende Wiederhol-Quelldatenbereiche, Quelldatenfelder, Seitentypen und Steuerelemente. Als Steuerelemente werden alle Daten und sonstige Informationen bezeichnet, die bei Bedingungen logisch verknüpft werden können. Steuerelemente sind insbesondere Seitentypenfelder, Dokumentenbegrenzungsfelder und Positionselemente, die jeweils ein Datum im Dokument definieren, sowie Zeilennummern bestimmter Zeilen. Im vorliegenden Ausführungsbeispiel sind zwei Seitentypen "Lieferschein erste Seite" und "Lieferschein Folgeseite" definiert, für die jeweils ein separater Regelsatz angegeben ist. Ferner ist ein Wiederhol-Quelldatenbereich "Tabelle" definiert, der mehrfach im Dokument auftreten kann, wobei dies hier unabhängig vom Seitentyp ist, da er auf beiden Seitentypen jeweils mit dem dort definierten Quelldatenbereich "Tabellenbereich" verknüpft ist. Ein solcher Wiederhol-Quelldatenbereich enthält Quelldatenfelder und/oder Quelldatenbereiche. Er enthält jedoch keine Elemente zur eigenen Positionierung. Die Positionierung erfolgt über die mit ihm verknüpften Quelldatenbereiche (hier: "Tabellenbereich").

Als Eigenschaften des Dokumentes sind der Zeichencode für den Zeilenumbruch, der Zeichencode für den Seitenumbruch und die Zeichentabelle sowie eine Bedienungsliste zur Erkennung von Seitentypen definiert. Der Seitentyp "Lieferschein erste Seite" wird anhand der Bedingung erkannt, dass ein Seitentypenfeld 1 26/1 (Zeile 2 der aktuell bearbeiteten Seite, Zeichen 66 - 88) die Zeichenfolge **"Liefersche** i n" und ein Seitentypenfeld 2 26/2 (Zeile 87 der aktuell bearbeiteten Seite, Zeichen 83 - 84) das Zeichen "1" enthält. Die Seitentypenfelder 26/1 und 26/2 sind auf Seite 1 und 2 von Figur 9 eingezeichnet. Aus Gründen der Übersichtlichkeit sind in Figur 9 lediglich eine kleine Auswahl aller Steuerelemente und Quelldatenbereiche dargestellt.

Die Bedingung zur Erkennung des Seitentyps "Lieferschein Folgeseite" lautet, dass das Seitentypenfeld 1 26/1 die Zeichenfolge **"Lieferschein"** enthält und das Seitentypenfeld 2 ungleich "1" ist.

Die Definition der Seitentypen umfasst wieder Strukturelemente und Eigenschaften. Die Strukturelemente weisen wiederum Quelldatenbereiche, Quelldatenfelder und Steuerelemente auf. Zur ersten Seite sind drei Quelldatenbereiche "Versender" 24/1, "Versandanschrift" 24/2 und der Quelldatenbereich "Tabellenbereich" 24/3 enthalten. dieser ist mit dem im "Dokument" enthaltenen Wiederhol-Quelldatenbereich "Tabelle" verknüpft. Ferner sind eine Reihe von Quelldatenfelder, die in keinem dieser Quelldatenbereiche angeordnet sind, mittels absoluter Adressierung definiert. Beispielhaft sind hier die Quelldatenfelder "Kundennummer" 23/1, "Bestellnummer" 23/2, "Auftragsnummer" 23/3 und "Tel/Faxnummer" 23/4 aufgeführt. Diese Quelldatenfelder sind durch Angaben der Zeilennummern und durch Angabe der Zeichen, die sie innerhalb der jeweiligen Zeile umfassen, eindeutig definiert.

Unter den Eigenschaften dieses Seitentyps sind Bedingungen zur Positionierung der Quelldatenbereiche und eine Bedingung zur Erkennung der Dokumentgrenze angegeben. In diesem Ausführungsbeispiel sind die Quelldatenbereiche alle absolut durch die Zeilennummer der ersten Zeile des Quelldatenbereiches positioniert, nämlich in den Zeilen 3, 9 bzw. 43. Im Rahmen der Erfindung ist es selbstverständlich auch möglich, die Position der Quelldatenbereiche auch relativ, beispielsweise durch Detektion einer Zeichenfolge, festzulegen.

Das Ende eines Dokumentes wird dann detektiert, wenn ein Dokumentenbegrenzungsfeld 25/1, das unmittelbar anschließend an eine Seitennummer (Seitentypenfeld 26/2) angeordnet ist, das Zeichen "-" enthält. Dies ist im vorliegenden Ausführungsbeispiel auf Seite 1 nicht der Fall, daher umfasst das Dokument mehrere Seiten.

Die Definition der Folgeseiten ist ähnlich wie die Definition der ersten Seite ausgebildet, wobei sich die Folgeseiten dadurch unterscheiden, dass sie lediglich einen einzigen Quelldatenbereich, nämlich den "Tabellenbereich" 24/3 umfassen.

Die Wiederhol-Quelldatenbereiche sind in den Regeln und Bedingungen definiert. Im vorliegenden Anwendungsbeispiel gibt es lediglich einen Wiederhol-Quelldatenbereich "Tabelle". Dieser ist mit dem Quelldatenbereich "Tabellenbereich" verknüpft und umfasst drei Quelldatenbereiche "Anlieferung" 24/4, "Versandhinweise" 24/5 und "Lieferposten" 24/6. Dies zeigt die sehr vorteilhafte Eigenschaft eines Ausführungsbeispiels der Erfindung, dass mehrere Quelldatenbereiche ineinander verschachtelt anordbar sind, wobei insbesondere die Positionierung eines Quelldatenbereiches, der innerhalb eines weiteren Quelldatenbereiches angeordnet ist, bezüglich des weiteren Quelldatenbereiches erfolgt, d.h. dass die Zeilennummerierung im weiteren Quelldatenbereich für die hierin angeordneten Quelldatenbereiche mit der Zahl "1" beginnt. So kann die Positionierung der Quelldatenbereiche innerhalb eines "übergeordneten Quelldatenbereiches" unabhängig vom Inhalt des Dokumentes außerhalb des übergeordneten Quelldatenbereiches erfolgen.

Im Wiederhol-Quelldatenbereich "Tabelle" wird das Vorhandensein der einzelnen Quelldatenbereiche "Anlieferung" 24/4, "Versandhinweise" 24/5 und "Lieferposten" 24/6 anhand der Detektion bestimmter Zeichenfolgen mit einer CONTAIN-Funktion wie "Anlieferung", "Anzahl" bzw. mit einer numerischen Funktion zur Detektion eines ganzen Zahlwertes in den Positionselementen 1 bis 3 detektiert.

Nachfolgend wird kurz die Definition der einzelnen Quelldatenbereiche erläutert.

Der Quelldatenbereich "Versender" 24/1 beinhaltet vier Quelldatenfelder 23/5 bis 23/8, die innerhalb des Quelldatenbereichs "Versender" absolut adressiert sind. Ferner ist die Bedingung zur Erkennung des Quelldatenbereichsende dadurch definiert, dass die Zeilennummer gleich "4" ist. Dies bedeutet, dass der Quelldatenbereich "Versender" vier Zeilen umfasst. In ähnlicher Weise ist auch der Quelldatenbereich "Versandanschrift" 24/2 definiert, der jedoch sieben Zeilen umfasst.

Ein Quelldatenbereich "Tabellenbereich" 24/3 ist mit dem Wiederhol-Quelldatenbereich "Tabelle" verknüpft und enthält die Bedingung zur Erkennung des Quelldatenbereichsende.

Der Quelldatenbereich "Anlieferung" 24/4 umfasst lediglich eine einzige Zeile, hier nämlich die erste Zeile des Quelldatenbereiches "Tabellenbereich" 24/3 mit zwei Quelldatenfeldern "Lieferdatum" 23/9 und "Lieferuhrzeit" 23/10.

Der Quelldatenbereich "Versandhinweis" enthält eine Reihe von Quelldatenfeldern, in welchen beispielhaft auf der letzten Seite in Figur 9 als Felddatenfeld "Anzahl Packstücke" 23/11 und das Quelldatenfeld "Auftragsabwicklung" 23/12 eingezeichnet sind.

Der Quelldatenbereich "Lieferposten" 24/6 umfasst weitere Quelldatenbereiche "Postenbeschreibung" 24/8 und "Unterposten" 24/9. Im Quelldatenbereich "Lieferposten" ist eine Bedingungsliste zur Erkennung der beinhalteten Quelldatenbereiche "Postenbeschreibung" 24/8 und "Unterposten" 24/9 aufgeführt. Der Quelldatenbereich "Postenbeschreibung" 24/8 beginnt in der zweiten Zeile des übergeordneten Quelldatenbereiches "Lieferposten" 24/6. Der Quelldatenbereich "Postenbeschreibung" ist somit absolut adressiert. Der Quelldatenbereich "Unterposten" 24/9 ist relativ adressiert, wobei das Positionselement 27/1 mit dem Positionselement 27/2 verglichen wird und bei Übereinstimmung festgestellt wird, dass der Quelldatenbereich "Unterposten" 24/9 vorliegt. Die Erkennung dieser Quelldatenbereiche definiert auch den Anfang dieser Quelldatenbereiche.

Weiterhin ist eine Bedingung zur Erkennung des Endes des Quelldatenbereiches "Lieferposten" angegeben, mit welchen das Ende durch Detektion eines weiteren Lieferpostens oder durch Detektion des Tabellenendes erkannt wird.

Weiterhin sind die Quelldatenbereiche "Postenbeschreibung" 24/8 und "Unterposten" 24/9 näher definiert, wobei der Quelldatenbereich "Unterposten" einen weiteren Quelldatenbereich "Unterpostenbeschreibung" 24/10 beinhaltet.

Das obige Ausführungsbeispiel zeigt, wie die Quelldatenfelder 23 in einem Eingangsdokument mittels absoluter und relativer Adressierung, die auch mittels der Quelldatenbereiche beliebig kombiniert und verschachtelt werden kann, positioniert werden, um die in dem Eingangsdokument enthaltenen Daten zu extrahieren. Diese extrahierten Daten werden automatisch in einer strukturierten Datendatei entsprechend einer der in Fig. 2 dargestellten Baumstruktur entsprechenden Baumstruktur abgespeichert.

Das oben gezeigte Ausführungsbeispiel zeigt die Regelsätze für die beiden Seitentypen und die Bedingungen zum Detektieren der Dokumenten- bzw. Seitengrenzen. Die grundsätzliche Struktur zur Definition der einzelnen Elemente, wie Dokument, Seitentyp und Quelldatenbereich umfassen Quelldatenbereiche, Quelldatenfelder und Steuerelemente. Lediglich das Element "Dokument" enthält die Definition von Wiederhol-Quelldatenbereiche, Seitentypen und Definitionen zu grundsätzlichen Eigenschaften des Dokumentes. Im Rahmen der vorliegenden Erfindung können die Seitentypen auch als Quelldatenbereiche betrachtet werden, da sie mit der gleichen Struktur definiert werden, wie der eigentliche Quelldatenbereich.

Weiterhin zeigt das obige Ausführungsbeispiel, dass bestimmten Typen von Quelldatenbereichen, wie zum Beispiel dem Quelldatenbereich "Tabelle" bestimmte weitere Quelldatenbereiche, wie z. B. die Quelldatenbereiche "Anlieferung", "Versandhinweise" und "Lieferposten" derart zugeordnet sind, dass die weiteren Quelldatenbereiche nur im übergeordneten Quelldatenbereich (hier "Tabelle") auftreten.

Beim Extrahieren der Daten wird mittels eines Quelldatenbereichszeigers erfasst, aus welchen Quelldatenbereiche aktuell Daten extrahiert werden. Dieser Zeiger entspricht somit auch einer Anzeige der Ebene der Baumstruktur der Abbildungselemente. Der größte Quellbereich entspricht hierbei dem gesamten Dokument. Am Ende einer Seite wird der Quelldatenbereichszeiger derart verändert, dass er auf das gesamte Dokument zeigt. Falls ein Quelldatenbereich, der mit einem Wiederhol-Quelldatenbereich verknüpft ist und sich somit über ein Seitenende hinaus auf eine nachfolgende Seite erstrecken kann, d.h., dass dieser Quelldatenbereich sich über das Seitenende hinaus auf eine Nachfolgeseite erstreckt, wird in einem zusätzlichen Seitenwechselzeiger der Wert des Quelldatenbereichszeigers gespeichert, mit welchem dieser auf diesen Quelldatenbereich gezeigt hat. Beim Abarbeiten der Folgeseite wird bei Erreichen dieses Quelldatenbereiches, d.h., dass der Quelldatenbereichszeiger wieder den gleichen Wert, wie der Seitenwechselzeiger annimmt, der entsprechende Datensatz in der strukturierten Datendatei ergänzt und kein neuer Datensatz für diesen Quelldatenbereich angefangen.

Die Erfindung ist oben anhand eines Beispieles näher erläutert, bei welchem sich die Quelldatenbereiche immer über die gesamte Seitenbreite erstrecken. Im Rahmen der Erfindung ist es jedoch auch möglich, Quelldatenbereiche zu definieren, die sich lediglich über einen Teil einer oder mehrerer aufeinanderfolgender Zeilen erstrecken. Diese Quelldatenbereiche bilden somit Spalten im jeweiligen Dokument, wobei mehrere derartige spaltenförmige Quelldatenbereiche nebeneinander angeordnet werden können. Diese spaltenförmigen Quelldatenbereiche sind vor allem zum Auslesen von Tabellen geeignet.

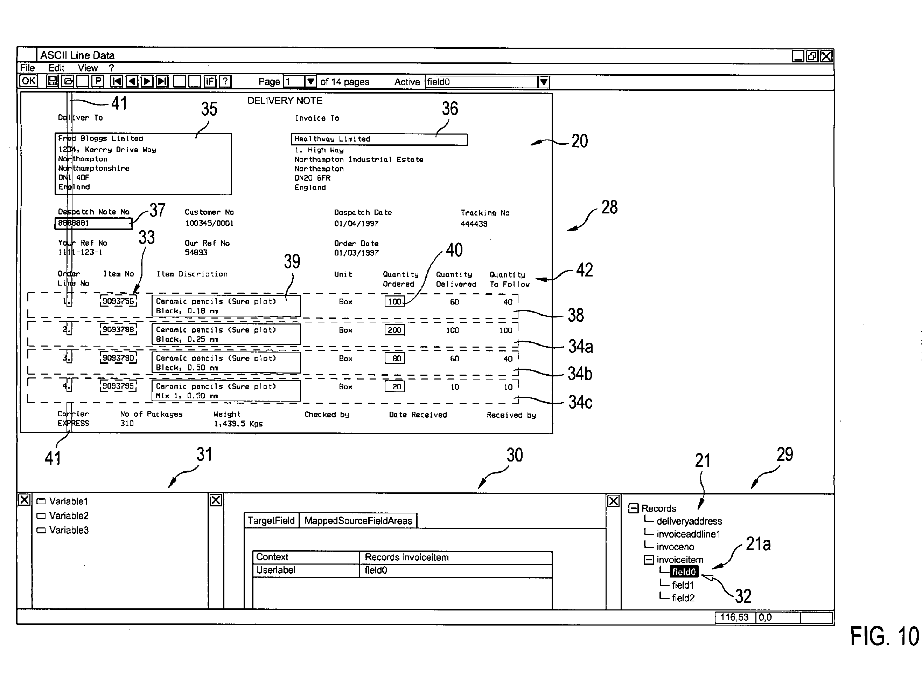

In Figur 10 ist der durch ein Computerprogramm-Produkt gemäß dem zweiten Aspekt der Erfindung bewirkte Aufbau einer Bildschirmanzeige dargestellt. Das Vorlagedokument 20 wird dabei in einem ersten Bildschirmfenster 28 wiedergegeben, die Baumstruktur 21 in einem zweiten Bildschirmfenster 29. Im Fenster 29 ist aktuell das Datenfeld "field0" 32 unter dem Datenfeld "invoiceitem" markiert. Dementsprechend sind im Vorlagedokument 20 alle unter der Überschrift "Item NO" stehenden Quelldatenfelder 33 durch eine doppelte Umrandung im Vorlagedokument 20 hervorgehoben. Im dritten Fenster 30 sind strukturelle Informationen zu dem markierten Datenfeld 32 (field0) angezeigt. Diese strukturellen Zuordnungen, wie z. B. Variablentyp (character, integer, flow), können über das Fenster 30 eingestellt werden.

Im Fenster 31 sind alle Variablen angezeigt, die zur Prozesssteuerung verwendet werden, beispielsweise Variablen für Wiederholelemente oder zum Erkennen von ENDE-Bedingungen. Im Fenster 32 können auch neue Variablen definiert werden und Zuweisungen zu Quelldatenfeldern im Vorlagedokument 20 (ebenfalls mit gedachten Linien) vorgenommen werden. Beispielsweise ist Variable2 dem Inhalt des Bereichs 41 zugeordnet. Diese Variable wird verwendet um die Wiederholgruppenregel zu überprüfen, d.h. ob der Inhalt der Variable2 identisch mit einem Punkt ist.

Im Fenster 30 werden alle typspezifischen Eigenschaften von Markierungsbereichen bzw. Datenfeldern angezeigt. Sie sind über Fenster 30 im Rahmen der der Prozesslogik entsprechenden, gespeicherten Regeln auch veränderbar. Da im Fenster 29 gerade das field0 markiert ist, werden im Fenster 30 alle zum field0 gehörenden Eigenschaften angezeigt.

Im Ausführungsbeispiel der Figur 10 werden der Struktur des im Fenster 28 angezeigten Vorlagedokuments 20 auf einer ersten hierarchischen Strukturebene vier Bereiche bzw. Quelldatenfelder zugeordnet, nämlich dem im Vorlagedokument 20 markierten Bereich 35 das Datenfeld "Delivery address", dem in der strukturierten Datei eine Zeichen-Variable zugeordnet ist, die mehrere Zeichen inklusive Zeilenumbruchs-Steuerzeichen umfassen kann, dem Quelldatenfeld 36 mit dem Inhalt "Healthway Limited", das Datenfeld "invoiceaddrline 1" in der Baumstruktur 21 und dem Datenfeld 37 des Vorlagedokuments 20, das Datenfeld "invoceno" in der Baumstruktur 21. Dem im Vorlagedokument 20 markierten Bereich 38, in dem wiederum drei Datenfelder 33, 39 und 40 markiert sind, ist in der Baumstruktur 21 als Strukturelement das ARRAY "invoiceitem" zugeordnet, dem wiederum als untergeordnete Strukturelemente die Datenfelder field0, field1 und field2 zugeordnet sind. Field0 entspricht dem Quelldatenfeld 33, field1 dem Quelldatenbereich 39 und field2 dem Quelldatenfeld 40.

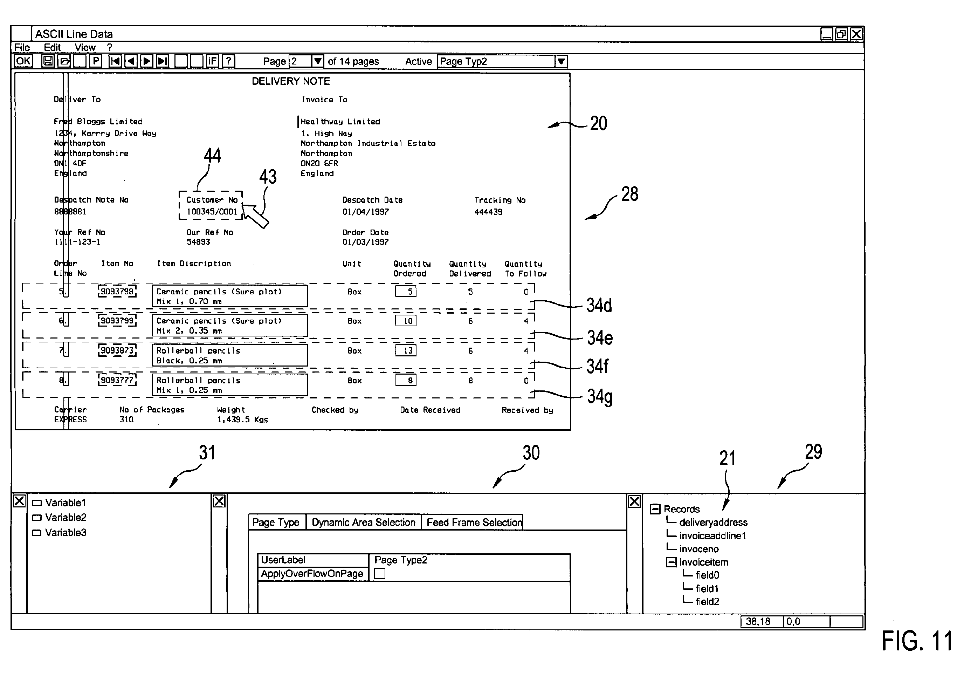

Dem markierten Bereich 38 ist weiterhin die Eigenschaft zugewiesen, dass er eine Wiederholgruppe darstellt, das heißt, dass seine Struktur in dem Vorlagedokument 20 mehrfach vorkommt und dass die entsprechenden Daten des Eingangs-Dokumentendatenstroms jeweils dem selben Datenfeld in der Baumstruktur 21 zugeordnet werden. Die entsprechenden Wiederholgruppen des Vorlagedokuments 20 sind in den Figuren 10 und 11 mit den Bezugszeichen 34a, 34b, 34c, 34d, 34e, 34f und 34g bezeichnet. Im vorliegenden Fall ist die Bedingung für eine Wiederholgruppe, dass in einer Zeile jeweils an der dritte Stelle (Spalte) ein Punkt steht. Im Vorlagedokument 20 sind dies die in der Auftragstabelle 42 aufgeführten Bestellzeilennummern (order line number) mit den Werten 1., 2., 3., usw. Die Wiederholgruppe wird in der in einer x-y-Matrix dargestellten Weise des Vorlagendokuments 20 somit in der dritten Spalte gesucht, die in Figur 10 mit dem Bezugszeichen 41 versehen ist. In allen Folgeseiten des Vorlagedokuments 20 werden die entsprechenden Folgeeinträge aufgrund der Wiederholregel und der dem Wiederholbereich 38 bzw. 34 zugeordneten Datenfeldstruktur automatisch erkannt, was z. B. in Figur 11 für die Folgeeinträge 5. bis 8. (Wiederholgruppen 34d bis 34g) ersichtlich ist. Aus dem Eingangs-Datenstrom bzw. dem Vorlagendokument 20 können somit die dem Eingangs-Datenstrom zugrunde liegenden variablen Daten, wie z. B. die in den Datenfeldern 33, 39 und 40 enthaltenen Daten, von statischen, das heißt wiederkehrenden Daten unterschieden und gegebenenfalls getrennt werden. Im vorliegenden Fall werden beispielsweise die Daten der Quelldatenfelder bzw. Bereiche 35, 36, 37, die mit gleichem Inhalt auf Folgeseiten des Vorlagedokuments 20 wieder erscheinen, die jedoch zur Aufbereitung eines Eingangs-Datenstroms gemäß dem ersten Aspekt der Erfindung nur einmal benötigt werden, als statisch erkannt und deren erneutes Auftauchen bei der Reformatierung des Datenstroms ignoriert.

Aufgrund der Möglichkeit, computergestützt anhand grafikorientierter Hilfsmittel, wie insbesondere der Möglichkeit, ein oder mehrere Quelldatenfelder mit einem Rechteck zeilen- und spaltenweise beliebig festzulegen, können ohne weiteres automatisch die entsprechenden Regeln erstellt werden. Zur Festlegung des Bereichs 38 als Wiederholgruppe wird zunächst ein Rechteck um alle in Figur 10 gezeigten Daten des markierten Bereichs unter Benützung einer Computermaus am Bildschirm im Fenster 28 gezogen. Dann werden die relevanten Quelldatenfelder 33, 39 und 40 jeweils einzeln markiert und ihnen jeweils zugeordnet sowie ihre korrespondierenden Datenfelder in der Baumstruktur 21 dem als Feld (ARRAY) definierten Objekt invoiceitem als Unterstruktur zugeordnet. Weiterhin wird invoiceitem als Wiederholgruppe definiert und als Wiederholregel, wie bereits oben beschrieben, das Auffinden eines Punktes in der dritten Spalte einer Zeile festgelegt. Als Ende für die Wiederholgruppe kann einerseits definiert werden, dass ein Dokumentenende (dem Bereich 38 übergeordnete Struktur "Dokument" bzw. in der Baumstruktur "Records") auftritt und/oder eine das Auftreten der Wiederholungsgruppe beendende Bedingung erfüllt ist, z.B. dass im Quelldatenfeld 36 und einer damit verbundenen Variable des Fensters 31 ein neuer Name (Inhalt) auftritt.

Der Bereich 39, dem die Variable field1 zugeordnet ist, stellt einen ebenenübergreifend mit dem Bereich 38 verschachtelten Markierungsbereich dar. Bei farbiger Anzeige der Fenster 28 und 29 werden gleichartige Strukturelemente, wie z. B. der markierte Bereich 38 und seine Wiederholgruppen 34a bis 34g, sowie das entsprechende Strukturelement invoiceitem in der Baumstruktur 21 in einer ersten Farbe z. B. rot dargestellt. Der Bereich 39 und die ihm entsprechenden Wiederholgruppen im Fenster 28 werden wahlweise in einer zweiten Farbe angezeigt, z. B. blau, oder, wie in Figuren 10 und 11 ersichtlich, grafisch durch durchgezogene Linien abgesetzt von den gestrichelten Linien des markierten Bereichs 38 und seiner Wiederholgruppen 34a bis 34g.

Im Fenster 30 der Figur 11 ist angezeigt, dass die im Fenster 28 angezeigten Daten des Vorlagedokuments 20 einem zweiten Seitentyp (page typ 2) zuzuordnen sind. Diese Anzeige und Zuordnung kann entweder automatisch aufgrund entsprechender Daten des Eingangs-Dokumentendatenstroms erfolgen oder, insbesondere menügeführt, durch den Benutzer über Fenster 30 eingestellt werden.

Wie in Figur 11 zu sehen, kann im Vorlagedokument 20 mit einem Mauszeiger 43 durch das Vorlagedokument 20 navigiert werden. Wenn sich der Mauszeiger 43 in die Nähe einer Information bewegt, so wird automatisch ein Bereich 44 angezeigt, der computerunterstützt als zusammengehöriger Bereich erkannt wird. Dabei kann insbesondere berücksichtigt werden, dass Daten, wie im Falle der Figur 11, ein zusammengehöriges Gebiet bilden, das vollständig von Leerzeichen umgeben ist. Weiterhin kann die Historie der Bearbeitung des Vorlagedokuments 20 berücksichtigt werden, das heißt, Daten, die bereits vorher markiert werden oder als Wiederholgruppen erkannt werden, werden nicht erneut automatisch zur Markierung vorgeschlagen. Auf Knopfdruck z. B. mit der rechten Maustaste kann zu dem vorgeschlagenen markierten Bereich ein weiterer Vorschlag hinsichtlich des Strukturelements in der Baumstruktur 21 gemacht werden, beispielsweise ob ein ARRAY angelegt werden soll oder nur ein Datenfeld. Entsprechend kann eine Auswahl angeboten werden, ob eine Wiederholungsgruppe angelegt werden soll oder ein nicht wiederkehrendes Datenfeld.

Nachfolgend wird die Erfindung kurz zusammengefasst: Mit dem erfindungsgemäßen Verfahren werden Quelldatenfelder im Eingangs-Dokumentendatenstrom zum Auslesen von zu extrahierenden Daten automatisch positioniert, wobei deren Positionierung mittels absoluter oder relativer Adressierung erfolgt. Insbesondere können die Quelldatenfelder mittels Quelldatenbereiche positioniert werden, mit welchen Abschnitte der einzelnen Dokumente erfasst werden. Diese Quelldatenbereiche können verschachtelt angeordnet sein und selbst wiederum absolut oder relativ positioniert werden.

Die entsprechenden Regeln können einfach durch Markieren der entsprechenden Quelldatenbereiche und Quelldatenfelder in einem Vorlagedokument erstellt werden.

Die Erfindung ist insbesondere dazu geeignet, als Computerprogramm (Software) realisiert zu werden. Sie kann damit als Computerprogramm-Modul als Datei auf einem Datenträger wie einer Diskette, DVD- oder CD-ROM oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann in einem Computer, in einem Druckgerät oder in einem Drucksystem mit vorgeschalteten oder nachgeschalteten Datenverarbeitungsgeräten Anwendung finden. Dabei ist klar, daß entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

### Bezugszeichenliste

- 1: Dokumenten-Produktionssystem
- 2: Main-Frame-Architektur
- 3: Host-Computer
- 4: Bearbeitungscomputer (File-Server)
- 5: Netzwerkarchitektur
- 6a, 6b: Druckgerät
- 7: Überwachungssystem
- 7a: Überwachungscomputer
- 7b: Datenbank
- 7c: Computerprogrammmodul
- 8: Print Manager-Modul
- 9: Konverter
- 10a, 10b: Lesestation
- 11a, 11b: Barcodeleser
- 12, 12a: Client Computer
- 13: Client Netzwerk
- 14a,b,c,d: Druckdatenleitung
- 15: Gerätesteuerungsnetzwerk
- 16: Druckserver
- 16a: Bildschirm
- 17: Testsystem
- 18: Nachbearbeitungsgeräte
- 19: Druckgut
- 20: Vorlagedokument
- 21: Baumstruktur
- 21a: Zweig der Baumstruktur
- 22: Datenfeld
- 23: Quelldatenfeld
- 24: Quelldatenbereich
- 25: Seitentypfeld
- 26: Dokumentenbegrenzungsfeld
- 27: Positionselement
- 28: erstes Fenster (Vorlagedokument)
- 29: zweites Fenster (Baumstruktur)
- 30: drittes Fenster (Strukturerläuterungen)
- 31: viertes Fenster (Variablenübersicht)
- 32: Markierung in Baumstruktur
- 33: Markiertes Quelldatenfeld
- 34: Wiederholgruppe
- 35: Quelldatenbereich
- 36: Erstes Quelldatenfeld
- 37: Zweites Quelldatenfeld
- 38: Markierter Bereich einer Wiederholgruppe
- 39: Quelldatenfeld der Wiederholgruppe
- 40: Quelldatenfeld der Wiederholgruppe
- 41: Spalte, in der eine Wiederholgruppe gesucht wird
- 42: Auftragstabelle des Vorlagedokuments
- 43: Mauszeiger
- 44: Automatisch angezeigter Bereich

## Patentansprüche

1. Verfahren zum Erstellen mindestens einer Regel eines Regelsatzes zur Nutzung des Regelsatzes in einem Verfahren zum Umwandeln eines Eingangs-Dokumentendatenstroms mit einem oder mehreren Dokumenten in eine strukturierte Datendatei zur Erzeugung eines Ausgangs-Dokumentendatenstroms, wobei zum Umwandeln des Eingangs-Dokumentendatenstroms
- aus dem Eingangs-Dokumentendatenstrom Daten gemäß dem Regelsatz extrahiert und in die strukturierte Datendatei gespeichert werden,
- in der strukturierten Datendatei den einzelnen Datenfeldern (22) Feldnamen zugeordnet sind und die Datenfelder (22) in mehreren Datenebenen strukturiert sind und
- der Regelsatz derart ausgebildet ist, dass beliebige Daten aus dem Eingangs-Dokumentendatenstroms auf ein beliebiges Datenfeld (22) der strukturierten Datendatei abbildbar sind, und wobei zum Erstellen der Regel
- über eine graphische Benutzeroberfläche mit mehreren Fenstern in einem ersten Fenster (28) mindestens ein Vorlagedokument (20) dargestellt wird, das dem Format der im Eingangs-Dokumentendatenstrom enthaltenen Dokumente entspricht, und in einem zweiten Fenster (29) die Datenfelder in einer Baumstruktur (21), die mehrere Ebenen umfasst, angeordnet werden,
- mit grafischen Mitteln ein Quelldatum (23, 33) des Vorlagedokuments (20) markiert oder mehrere insbesondere logisch zusammengehörige Quelldaten des Vorlagedokuments (20) als zusammengehöriger Markierungsbereich (24, 24/1, 24/2, 24/3, 24/4, 24/5, 24/6, 38, 44) markiert werden und mindestens ein dem Markierungsbereich (23, 24) entsprechendes Strukturelement (21, 22, 22/I, 22/II) der Baumstruktur (21) dem Markierungsbereich (23, 24, 38, 44) zugewiesen wird, wobei das Vorlagedokument (20) zeilen- und spaltenweise dargestellt wird und der Markierungsbereich (24, 38, 44) zeilen- und spaltenweise frei auswählbar ist,
- im Vorlagedokument (20) ein Wiederholelement (25), das charakteristisch für eine in dem Vorlagedokument (20) wiederkehrende Struktur, eine sogenannte Wiederholstruktur, ist, ausgewählt wird,
- Zeilen- und/oder Spaltenposition innerhalb des Markierungsbereichs im Vorlagedokument (20) als strukturell charakteristische Daten des Wiederholelements (25) und/oder ein Textinhalt innerhalb des Markierungsbereichs im Vorlagedokument (20) als charakteristische Daten des Wiederholelements manuell oder automatisch erfasst werden,
- in dem Vorlagedokument (20) mehrere Markierungsbereiche (38, 39) markiert werden, die ebenenübergreifend ineinander verschachtelt sind und die gleichzeitig angezeigt werden, und
- computergestützt automatisch oder manuell über eine Menüführung für eine Bedienperson die Baumstruktur (21) dargestellt und Strukturelemente der Baumstruktur (21) eingefügt, verändert und/oder gelöscht werden, wobei automatisch entsprechende Änderungen an gespeicherten Strukturelementen erfolgen.

2. Verfahren nach Anspruch 1,
**dadurch gekennzeichnet,**
**dass** durch das Markieren von Daten im Vorlagedokument jeweils ein Quelldatenfeld (23, 36, 37, 39, 40) definiert wird und durch das Zuweisen eines entsprechenden Strukturelementes (21, 22, 22/I, 22/II) das Quelldatenfeld (23, 36, 37, 39, 40) mit einem Datenfeld (22) der Baumstruktur (21) verknüpft und automatisch eine Regel erstellt wird, um ein Quelldatenfeld aus dem Eingangs-Dokumentendatenstrom auszulesen und dessen Inhalt gemäß der strukturierten Datendatei in dem korrespondierenden Datenfeld (22) abzuspeichern.

3. Verfahren nach Anspruch 1 oder 2,
**dadurch gekennzeichnet,**
**dass** der Eingangs-Dokumentendatenstrom in mehrere Dokumente unterteilt ist, wobei für ein jedes Dokument in der strukturierten Datendatei ein strukturierter Datensatz abgespeichert wird.

4. Verfahren nach einem der Ansprüche 1 bis 3,
**dadurch gekennzeichnet,**
**dass** die Dokumente mehrere Seiten umfassen können, wobei die Daten seitenweise extrahiert werden.

5. Verfahren nach einem der Ansprüche 1 bis 4,
**dadurch gekennzeichnet,**
**dass** der Eingangs-Dokumentendatenstrom lediglich Zeichen, die mittels einer oder mehrerer Zeichentabellen (code pages) kodiert (ASCII, EBCDIC, Unicode, DBCS, ...) sind, Zeilenumbrüche und Seitenumbrüche umfasst.

6. Verfahren nach einem der Ansprüche 1 bis 4,
**dadurch gekennzeichnet,**
**dass** der Eingangs-Dokumentendatenstrom lediglich Zeichen, die mittels einer einzigen Zeichentabelle (code page) kodiert (ASCII, EBCDIC, Unicode, DBCS, ...) sind, Zeilenumbrüche und Seitenumbrüche umfasst.

7. Verfahren nach Anspruch 5 oder 6,
**dadurch gekennzeichnet,**
**dass** die Zeilen- und/oder Seitenumbrüche jeweils durch eine bestimmte Zeichenfolge codiert sind.

8. Verfahren nach einem der Ansprüche 5 bis 7,
**dadurch gekennzeichnet,**
**dass** die Zeilen- und/oder Seitenumbrüche jeweils durch eine bestimmte Anzahl von Zeichen bzw. Zeilen kodiert sind.

9. Verfahren nach einem der Ansprüche 1 bis 8,
**dadurch gekennzeichnet,**
**dass** Daten aus dem Eingangs-Dokumentendatenstrom extrahiert werden, die im Eingangs-Dokumentendatenstrom in bestimmten Quelldatenfeldern (23, 36, 37, 39, 40) angeordnet sind, wobei die Quelldatenfelder (23, 36, 37, 39, 40) durch die Zeilennummer(n) in der jeweiligen Seite und die Zeichennummern in der bzw. den jeweiligen Zeilen definiert sind.

10. Verfahren nach einem der Ansprüche 1 bis 9,
**dadurch gekennzeichnet,**
**dass** Daten aus dem Eingangs-Dokumentendatenstrom extrahiert werden, die im Eingangs-Dokumentendatenstrom in bestimmten Quelldatenfeldern (23, 36, 37, 39, 40) angeordnet sind, wobei die Quelldatenfelder (23, 36, 37, 39, 40) durch die Zeilennummer(n) und die Zeichennummern in der bzw. den jeweiligen Zeilen innerhalb eines bestimmten Quelldatenbereichs in einem Dokument definiert sind.

11. Verfahren nach Anspruch 10,
**dadurch gekennzeichnet,**
**dass** zumindest ein Positionselement des Quelldatenbereichs im Dokument oder in einem weiteren Quelldatenbereich definiert ist.

12. Verfahren nach Anspruch 11,
**dadurch gekennzeichnet,**
**dass** mehrere Positionselemente, insbesondere ein Anfangs- und Endpositionselement, des Quelldatenbereichs in der jeweiligen Seite oder in einem weiteren Quelldatenbereich definiert sind.

13. Verfahren nach Anspruch 11 oder 12,
**dadurch gekennzeichnet,**
**dass** das bzw. die Positionselemente des Quelldatenbereichs als absoluter Ort durch Angabe der Zeilenzahl und Zeichenzahl innerhalb der jeweiligen Zeile in der jeweiligen Seite bzw. im weiteren Quelldatenbereich definiert sind.

14. Verfahren nach einem der Ansprüche 11 oder 12,
**dadurch gekennzeichnet,**
**dass** das bzw. die Positionselemente des Quelldatenbereichs als relativer Ort einer bestimmten Zeichenfolge in der 2005-0604 jeweiligen Seite bzw. im weiteren Quelldatenbereich definiert sind.

15. Verfahren nach Anspruch 14,
**dadurch gekennzeichnet,**
**dass** die Zeichenfolge entweder ortsunabhängig ist, in einem gewissen Bereich angeordnet ist oder an einem durch die Zeilenzahl und die Zeichenzahl innerhalb der Zeile(n) in der jeweiligen Seite oder in einem weiteren Quelldatenbereich definierten Ort angeordnet ist.

16. Verfahren nach einem der Ansprüche 10 bis 15,
**dadurch gekennzeichnet,**
**dass** mehrere Quelldatenfelder (23, 36, 37, 39, 40) in einem Quelldatenbereich (24) angeordnet sind.

17. Verfahren nach einem der Ansprüche 10 bis 16,
**dadurch gekennzeichnet,**
**dass** mehrere Quelldatenbereiche (24) in einem weiteren Quelldatenbereich (24) angeordnet sind.

18. Verfahren nach einem der Ansprüche 11 bis 17,
**dadurch gekennzeichnet,**
**dass** ein erster Quelldatenbereich (24) definierbar ist, der einem weiteren, zweiten Quelldatenbereich (24) derart zugeordnet wird, dass der erste Quelldatenbereich (24) nur im zweiten Quelldatenbereich (24) auftritt.

19. Verfahren nach einem der Ansprüche 12 bis 18,
**dadurch gekennzeichnet,**
**dass** beim Extrahieren mittels eines Quelldatenbereichszeigers erfasst wird, aus welchem Quelldatenbereich (24) aktuell Daten extrahiert werden, wobei der größte Quelldatenbereich (24) dem gesamten Dokument entspricht, und am Ende einer Seite der Quelldatenbereichszeiger derart, dass er auf das gesamte Dokument zeigt, und falls ein Bereich mit einer Endebedingung am Seitenende noch nicht vollständig abgearbeitet sein sollte, wird in einem Seitenwechselzeiger ein auf diesen Quelldatenbereich zeigender Wert gespeichert, so dass beim Abarbeiten einer folgenden Seite nach dem Abarbeiten seitentypischer Zeilen dieser Quelldatenbereich fortgesetzt wird, bis die Endebedingung erreicht ist.

20. Verfahren nach einem der Ansprüche 11 bis 19,
**dadurch gekennzeichnet,**
**dass** innerhalb eines Eingangs-Dokumentes ein bestimmter Quelldatenbereich (24) mehrfach erkannt wird, und der diesen Quelldatenbereich (24) definierende Regelsatz entsprechend oft zum Extrahieren von Daten und Speichern der Daten in der strukturierten Datendatei angewandt wird.

21. Verfahren nach einem der Ansprüche 1 bis 20,
**dadurch gekennzeichnet,**
**dass** ein Regelsatz mittels Quelldatenfelder (23, 36, 37, 39, 40) definiert wird, die im Eingangs-Dokumentendatenstrom auf die zu extrahierenden Daten positioniert werden, wobei die Positionierung mittels absoluter oder relativer Adressierung erfolgt.

22. Verfahren nach Anspruch 21,
**dadurch gekennzeichnet,**
**dass** die Positionierung der Quelldatenfelder (23, 36, 37, 39, 40) mittels Quelldatenbereiche (24), in welchen jeweils ein oder mehrere Quelldatenfelder (23, 36, 37, 39, 40) oder weitere Quelldatenbereiche (24) angeordnet sind, erfolgt.

23. Verfahren nach Anspruch 22,
**dadurch gekennzeichnet,**
**dass** die Quelldatenbereiche (24) als Strukturelemente weitere Quelldatenbereiche (24), Quelldatenfelder (23, 36, 37, 39, 40) und/oder Steuerelemente umfassen, wobei mittels logisch verknüpfter Steuerelemente Bedingungen zum Detektieren der Dokumenten- oder/und Seitengrenzen und/oder zum Suchen von insbesondere veränderten Zeichen oder Zeichenfolgen und/oder Bedingungen zur Positionierung von Quelldatenbereichen (24) definiert sind.

24. Verfahren nach einem der Ansprüche 1 bis 23, wobei das Strukturelement (21, 22, 22/I, 22/II) zusätzlich der Baumstruktur (21) zugewiesen und in dieser dargestellt wird.

25. Verfahren nach einem der Ansprüche 1 bis 24, wobei das Strukturelement einem Zweig (21a) der Baumstruktur (21) zugeordnet ist.

26. Verfahren nach einem der Ansprüche 1 bis 25, wobei dem Markierungsbereich (24) als Strukturelement ein einem Seitentyp, einem Datenfeld, einer Tabelle oder einem mehrere Datenfelder umfassenden Bereich entsprechendes Element zugeordnet wird.

27. Verfahren nach einem der Ansprüche 1 bis 26, wobei als strukturell charakteristische Daten des Wiederholelements (25) die Zeilenposition erfasst werden.

28. Verfahren einem der Ansprüche 1 bis 27, wobei als strukturell charakteristische Daten des Wiederholelements (25) die Spaltenposition erfasst werden.

29. Verfahren nach Anspruch 28, wobei insbesondere mit den charakteristischen Daten eine Wiederholregel gebildet wird, mit der im Vorlagedokument (20) und/oder im Eingangs-Dokumentendatenstrom alle zugehörigen Daten einer Wiederholstruktur insbesondere automatisch erkennbar sind.

30. Verfahren nach Anspruch 28 oder 29, wobei mit einer Zeigeeinrichtung (43) ein Element (23, 33) oder ein Bereich (24, 38, 44) innerhalb des Vorlagedokuments (20) ausgewählt wird und insbesondere bei Betätigung einer ersten Taste einer Eingabeeinrichtung automatisch kontextbezogen zu diesem Element (23, 33) oder Bereich (24, 38, 44) verfügbare Zuweisungsmöglichkeiten angezeigt werden.

31. Verfahren nach einem der Ansprüche 28 bis 30, wobei abhängig von der Position einer Zeigeeinrichtung (43) und insbesondere vom Betätigen einer zweiten Taste einer Eingabeeinrichtung im Vorlagedokument (20) automatisch mindestens ein zuordenbares Element (23) und/oder mindestens ein zuordenbarer Bereich (24, 38, 44) des Vorlagedokuments (20) hervorgehoben angezeigt werden.

32. Verfahren nach einem der Ansprüche 28 bis 31, wobei im Vorlagedokument (20) ein mehrere Daten umfassender Wiederholbereich (38) markiert wird und diesem in Abhängigkeit einer von einer Bedienperson menügeführt getroffenen Auswahl ein der Auswahl entsprechendes Strukturelement zugeordnet wird.

33. Verfahren nach einem der Ansprüche 1 bis 32, wobei für den markierten Bereich (23, 24, 33, 38, 44) und/oder einen Wiederholbereich eine ENDE-Bedingung automatisch oder manuell festgelegt wird.

34. Verfahren nach einem der Ansprüche 1 bis 33, wobei als Strukturelement ein Zweig (21a) in der Baumstruktur (21) angelegt wird und ein dem Zweig (21a) entsprechendes Feld vom Typ ARRAY in der strukturierten Datendatei.

35. Verfahren nach Anspruch 34, wobei einem Zweig (21a) in der Baumstruktur (21) mehrere Datenfelder als untergeordnete Strukturelemente zugeordnet sind und zur Erstellung und/oder Erweiterung der Baumstruktur (21) insbesondere wahlweise zuerst neue Datenfelder festgelegt werden und dann der übergeordnete Zweig zugeordnet wird oder zuerst der Zweig festgelegt wird und dann neue untergeordnete Datenfelder zugeordnet werden.

36. Verfahren nach einem der Ansprüche 28 bis 35, wobei das Wiederholelement (25) durch ein oder mehrere Zeichen, eine Tabelle, eine Dokumentenzeile, eine Dokumentenspalte, eine Tabellenzeile oder eine Tabellenspalte gebildet wird.

37. Verfahren nach einem der Ansprüche 28 bis 36, wobei das Wiederholelement (25) im markierten Bereich (24, 38, 44) liegt und insbesondere den gesamten markierten Bereich (24, 38, 44) umfasst.

38. Verfahren nach einem der Ansprüche 29 bis 37, wobei das Wiederholelement (25) mit dem Erstellen des zusammengehörigen Bereichs (24, 38, 44) festgelegt wird.

39. Verfahren nach einem der Ansprüche 29 bis 37, wobei das Wiederholelement (25) vor dem Erstellen des zusammengehörigen Bereichs (24, 38, 44) festgelegt wird.

40. Verfahren nach einem der Ansprüche 28 bis 39, wobei anhand der strukturell charakteristischen Merkmale des Wiederholelements (25) automatisch Daten der Wiederholungsstruktur im Vorlagedokument (20) und/oder im Eingangs-Dokumentendatenstrom ermittelt und/oder markiert angezeigt werden.

41. Verfahren nach einem der Ansprüche 1 bis 40, wobei der Markierungsbereich (24, 38, 44) Quelldatenfelder enthält und diese mit mindestens einem als Datenfeld ausgebildeten Strukturelement der Baumstruktur (21) verknüpft werden, wobei bei einer solchen Verknüpfung automatisch eine Regel erstellt wird, zum Auslesen eines Quelldatenfeldes aus dem Eingangs-Dokumentendatenstrom und zum Abspeichern dessen Inhaltes in die strukturierte Datendatei in dem korrespondierenden Datenfeld.

42. Verfahren nach einem der Ansprüche 28 bis 41, wobei durch die Festlegung einer Wiederholstruktur (38) oder eines Wiederholelements (25) in dem Vorlagedokument (20) in einer bestehenden Baumstruktur (21) automatisch oder manuell auswählbar entschieden wird, ob nachträglich ein der Wiederholstruktur (38) oder dem Wiederholelement (25) entsprechendes neues Strukturelement hinzugefügt wird.

43. Verfahren nach einem der Ansprüche 1 bis 42, wobei Datenfelder der Baumstruktur (21), die der Wiederholstruktur (38) zugeordnet sind, dem neuen Strukturelement als Unterstrukturelemente zugeordnet werden.

44. Verfahren nach einem der Ansprüche 1 bis 43, wobei zu dem Markierungsbereich (24, 38, 44) eine Fundregel zum Finden von Wiederholungsstrukturen (38, 34a...34g), in denen die im Markierungsbereich (38) enthaltene Datenstruktur erneut im Vorlagedokument (20) auftritt, erzeugt wird, mit der ermittelbar ist, an welchen Positionen Daten des Vorlagedokuments (20) dem Markierungsbereich (38) zuzuordnen sind.

45. Verfahren nach Anspruch 44, wobei die Fundregel in zeilen- und/oder spaltenweisen Positionskoordinaten angegeben wird.

46. Verfahren nach einem der Ansprüche 1 bis 45, wobei die Zuweisung des Strukturelements zur Markierung (24, 38, 44) automatisch unter Verwendung eines im Vorlagedokument (20) vorhandenen Strukturelements erfolgt.

47. Verfahren nach einem der Ansprüche 1 bis 46, wobei eine Ende-Bedingung für einen markierten Bereich (24, 38, 44) insbesondere automatisch erzeugt wird.

48. Verfahren nach Anspruch 47, wobei für einen ersten markierten Bereich (39), der einem zweiten markierten Bereich (38) untergeordnet ist, automatisch die ENDE-Bedingung des übergeordneten zweiten Bereichs übernommen wird.

49. Verfahren nach einem der Ansprüche 1 bis 48, wobei eine ENDE-Bedingung für einen markierten Bereich (24, 38, 44) über eine datengetriebene Bedingung, insbesondere über eine Steuervariable oder eine von einer Bedienperson erzeugt und/oder verändert wird.

50. Verfahren nach einem der Ansprüche 1 bis 49, wobei die Bedienperson über eine Menüführung über alle Regeln des Regelsatzes Erstellungs,- Änderungs,- und Löschungsbefugnis hat und automatisch entsprechende Änderungen an den gespeicherten Regeln erfolgen.

51. Verfahren nach einem der Ansprüche 1 bis 50, wobei insbesondere anhand der in der Baumstruktur (21) erzeugten Strukturelemente innerhalb eines im ersten Fenster (28) gleichzeitig oder nacheinander angezeigten Datenstroms, der zumindest ein vollständiges Vorlagedokument (20) enthält, alle zu einem gemeinsamen Strukturelement gehörenden Bereiche des Datenstroms gleichartig, insbesondere mit gleicher Farbe, markiert werden.

52. Verfahren nach einem der Ansprüche 1 bis 51, wobei zum Überprüfen des Regelsatzes die für die im ersten Fenster (28) dargestellten Daten geltenden Regeln auf diese Daten angewandt werden.

53. Verfahren nach Anspruch 52, wobei die Anwendung der Regeln an den im ersten Fenster (28) dargestellten Daten grafisch veranschaulicht wird.

54. Verfahren nach Anspruch 53, wobei in den im ersten Fenster (28) dargestellten Daten Bereiche verschiedener Ebenen und/oder Typen verschieden, insbesondere mit verschiedenen Farben, markiert werden.

55. Verfahren nach einem der Ansprüche 52 bis 54, wobei ein im zweiten Fenster (29) angezeigtes Strukturelement ausgewählt wird und automatisch alle im ersten Fenster (28) dargestellten Bereiche, die diesem Strukturelement zugeordnet sind, angezeigt werden.

56. Verfahren nach einem der Ansprüche 52 bis 55, wobei zu einem im zweiten Fenster (29) ausgewählten Strukturelement automatisch die ebenenweise übergeordneten und/oder untergeordneten, dem Strukturelement zugeordneten Strukturelemente oder der hierarchischen Ordnung entsprechende Symbole angezeigt werden.

57. Computerprogramm-Produkt zum Erstellen eines Regelsatzes für ein Verfahren nach einem der Ansprüche 1 bis 56, das beim Laden und Ausführen auf einem Computer ausgeführt wird, das Computerprogramm-Produkt umfassend eine graphische Benutzeroberfläche mit mehreren Fenstern (28, 29, 30, 31), wobei in einem ersten Fenster (28) ein Vorlagedokument (20) darstellbar ist, das dem Format der im Eingangs-Dokumentendatenstrom enthaltenen Dokumente entspricht, und in einem weiteren Fenster (29) die Datenfelder in einer Baumstruktur (21), die mehrere Ebenen umfassen kann, anordenbar sind, und Mittel zum Definieren von Quelldatenfeldern und Verknüpfen derselben mit den Datenfeldern, wobei bei einer solchen Verknüpfung automatisch eine Regel erstellt wird, zum Auslesen eines Quelldatenfeldes aus dem Eingangs-Dokumentendatenstrom und zum Abspeichern dessen Inhaltes in die strukturierte Datendatei in dem korrespondierenden Datenfeld.

58. Computerprogramm-Produkt nach Anspruch 57,
**dadurch gekennzeichnet,**
**dass** Mittel zum Definieren von Quelldatenfeldern eine Einrichtung zum Markieren (43) entsprechender Daten ist.

59. Computerprogramm-Produkt nach Anspruch 57 oder 58,
**dadurch gekennzeichnet,**
**dass** das Mittel zum Verknüpfen von Quelldatenfeldern mit Datenfeldern eine Einrichtung (43) zum Ziehen von einer Verbindungslinie zwischen dem jeweiligen Quelldatenfeld zu dem entsprechenden Datenfeld ist.

60. Computerprogramm-Produkt nach einem der Ansprüche 57 bis 59, **dadurch gekennzeichnet,**
**dass** Mittel zum Markieren von Quelldatenbereichen im Vorlagedokument (20) vorgesehen sind.

61. System zum Ausführen des Verfahrens nach einem der Ansprüche 1 bis 56, umfassend einen Computer, eine Anzeigeeinrichtung und Eingabemittel, wobei auf dem Computer ein Computerprogramm-Produkt gemäß den Ansprüchen 57 bis 61 gespeichert und ausführbar ist.

## Claims

1. A method for creating at least one rule of a rule set for using the rule set in a method for conversion of an input document data stream with one or more documents into a structured data file for generation of an output document data stream, wherein for the conversion of the input document data stream
- from the input document data stream data are extracted according to the rule set and are stored in the structured data file,
- in the structured data file field names are assigned to the individual data fields (22) and the data fields (22) are structured in a plurality of data levels, and
- the rule set is designed such that arbitrary data from the input document data stream can be mapped to an arbitrary data field (22) of the structured data file, and wherein for creating the rule
- via a graphical user interface with several windows in a first window (28) at least one template document (20) is shown that corresponds to the format of the documents contained in the input document data stream, and in a second window (29) the data fields are arranged in a tree structure (21) comprising several levels,
- with graphic means a source data (23, 33) of the template document (20) is marked or several in particular logically associated source data of the template document (20) are marked as associated marking range (24, 24/1, 24/2, 24/3, 24/4, 24/5, 24/6, 38, 44) and at least one structure element (21, 22, 22/I, 22/II) of the tree structure (21) corresponding to the marking range (23, 24) is assigned to the marking range (23, 24, 38, 44), the template document (20) being displayed in rows and columns and the marking range (24, 38, 44) being freely selectable in rows and columns,
- in the template document (20) a repeat element (25) that is characteristic for a structure recurring in the template document (20), a so-called repeat structure, is selected,
- row and/or column positions within the marking range in the template document (20) are detected as structurally characteristic data of the repeat element (25) and/or a text content within the marking range in the template document (20) is detected as characteristic data of the repeat element, manually or automatically,
- in the template document (20) several marking ranges (38, 39) are marked which are nested within one another in a manner that spans across levels and which are displayed simultaneously, and
- computer-assisted automatically or manually via a menu navigation for a user the tree structure (21) is displayed and structure elements of the tree structure (21) are inserted, modified and/or deleted, wherein corresponding modifications to stored structure elements are made automatically.

2. The method according to claim 1,
**characterized in that**
by the marking of data in the template document each time a source data field (23, 36, 37, 39, 40) is defined and by assigning a corresponding structure element (21, 22, 22/I, 22/II) the source data field (23, 36, 37, 39, 40) is linked to a data field (22) of the tree structure (21) and a rule is automatically created to read out a source data field from the input document data stream and to store its content according to the structured data file in the corresponding data field (22).

3. The method according to claim 1 or 2,
**characterized in that** the input document data stream is subdivided into a plurality of documents, wherein a structured data set is stored for each document in the structured data file.

4. The method according to one of the claims 1 to 3,
**characterized in that**
the documents can comprise a plurality of pages, wherein the data are extracted page-by-page.

5. The method according to one of the claims 1 to 4,
**characterized in that**
the input document data stream merely comprises characters that are encoded (ASCII, EBCDIC, Unicode, DBCS, ...) by means of one or more character tables (code pages), line breaks and page breaks.

6. The method according to one of the claims 1 to 4,
**characterized in that**
the input document data stream merely comprises characters that are encoded (ASCII, EBCDIC, Unicode, DBCS, ...) by means of a single character table (code page), line breaks and page breaks.

7. The method according to claim 5 or 6,
**characterized in that**
the line and/or page breaks are respectively encoded via a specific character sequence.

8. The method according to one of the claims 5 to 7,
**characterized in that**
the line and/or page breaks are respectively encoded via a specific number of characters or, respectively, lines.

9. The method according to one of the claims 1 to 8,
**characterized in that**
data from the input document data stream are extracted which data are arranged in specific source data fields (23, 36, 37, 39, 40) in the input document data stream, wherein the source data fields (23, 36, 37, 39, 40) are defined by the line number(s) in the respective page and the character numbers in the respective line or, respectively, lines.

10. The method according to one of the claims 1 to 9,
**characterized in that**
data from the input document data stream are extracted, which data are arranged in specific source data fields (23, 36, 37, 39, 40) in the input document data stream, wherein the source data fields (23, 36, 37, 39, 40) are defined by the line number(s) and the character numbers in the respective line or, respectively, lines within a specific source data range in a document.

11. The method according to claim 10,
**characterized in that**
at least one position element of the source data range is defined in the document or in a further source data range.

12. The method according to claim 11,
**characterized in that**
a plurality of position elements, in particular a start and end position element, of the source data range are defined in the respective page or in a further source data range.

13. The method according to claim 11 or 12,
**characterized in that**
the position element or, respectively, the position elements of the source data range are defined as an absolute location via specification of the line count and character count within the respective line in the respective page or, respectively, in the further source data range.

14. The method according to one of the claims 11 or 12,
**characterized in that**
the position element or, respectively, the position elements of the source data range are defined as a relative location of a specific character sequence in the respective page or, respectively, in the further source data range.

15. The method according to claim 14,
**characterized in that**
the character sequence is either spatially independent, is arranged in a certain range or is arranged at a location defined by the line count and the character count within the line(s) in the respective page or in a further source data range.

16. The method according to one of the claims 10 to 15,
**characterized in that**
a plurality of source data fields (23, 36, 37, 39, 40) are arranged in a source data range (24).

17. The method according to one of the claims 10 to 16,
**characterized in that**
a plurality of source data ranges (24) are arranged in a further source data range (24).

18. The method according to one of the claims 11 to 17,
**characterized in that**
a first source data range (24) can be defined that is assigned to a further, second source data range (24) such that the first source data range (24) occurs only in the second data range (24).

19. The method according to one of the claims 12 to 18,
**characterized in that**
upon extraction, it is detected by means of a source data range pointer from which source data range (24) data are currently extracted, wherein the largest source data range (24) corresponds to the entire document, and at the end of a page the source data range pointer such that it points to the entire document, and in the event that a range with an end condition at the page end should not yet be completely processed, a value pointing to this source data range is stored in a page change pointer, such that upon processing of a following page after the processing of page-typical lines this source data range is continued with until the end condition is reached.

20. The method according to one of the claims 11 to 19,
**characterized in that**
a specific source data range (24) is detected multiple times within an input document, and the rule set defining this source data range (24) is applied correspondingly often for extraction of data and storage of the data in the structured data file.

21. The method according to one of the claims 1 to 20,
**characterized in that**
a rule set is defined by means of source data fields (23, 36, 37, 39, 40) that are positioned in the input document data stream at the data to be extracted, wherein the positioning occurs by means of absolute or relative addressing.

22. The method according to claim 21,
**characterized in that**
the positioning of the source data fields (23, 36, 37, 39, 40) occurs by means of source data ranges (24) in which one or more source data fields (23, 36, 37, 39, 40) or further source data ranges (24) are respectively arranged.

23. The method according to claim 22,
**characterized in that**
the source data ranges (24) comprise further source data ranges (24), source data fields (23, 36, 37, 39, 40) and/or control elements as structure elements, wherein conditions for detection of the document and/or page boundaries and/or for searching for in particular altered characters or character sequences and/or conditions for the positioning of source data ranges (24) are defined by means of logically linked control elements.

24. The method according to one of the claims 1 to 23, wherein the structure element (21, 22, 22/I, 22/II) is additionally assigned to the tree structure (21) and is represented in this.

25. The method according to one of the claims 1 to 24, wherein the structure element is assigned to a branch (21a) of the tree structure (21).

26. The method according to one of the claims 1 to 25, wherein an element corresponding to a page type, a data field, a table or a range comprising a plurality of data fields is assigned as a structure element to the marking range (24).

27. The method according to one of the claims 1 to 26, wherein the row position is detected as structurally characteristic data of the repeat element (25).

28. The method according to one of the claims 1 to 27, wherein the column position is detected as structurally characteristic data of the repeat element (25).

29. The method according to claim 28, wherein a repeat rule is formed in particular with the characteristic data, with which repeat rule all associated data of a repeat structure can in particular be automatically detected in the template document (20) and/or in the input document data stream.

30. The method according to claim 28 or 29, wherein an element (23, 33) or a range (24, 38, 44) within the template document (20) is selected with a pointer device (43) and available assignment possibilities are automatically displayed in context-related manner to this element (22, 33) or range (24, 38, 44), in particular upon actuation of a first button of an input device.

31. The method according to one of the claims 28 to 30, wherein at least one assignable element (23) and/or at least one assignable range (24, 38, 44) of the template document (20) are automatically displayed emphasized in the template document (20) dependent on the position of a pointer device (43) and in particular upon actuation of a second button of an input device.

32. The method according to one of the claims 28 to 31, wherein a repeat range (38) comprising a plurality of data is marked in the template document (20) and, dependent on a menu-driven selection made by an operating personnel, a structure element corresponding to the selection is assigned to this repeat range (38).

33. The method according to one of the claims 1 to 32, wherein an END condition for the marked range (23, 24, 33, 38, 44) and/or a repeat range is established automatically or manually.

34. The method according to one of the claims 1 to 33, wherein a branch (21a) in the tree structure (21) is created as a structure element, and a field of the type ARRAY that corresponds to the branch (21a) is created in the structured data file.

35. The method according to claim 34, wherein a plurality of data fields are assigned to a branch (21a) in the tree structure (21) as subordinate structure elements and for creation and/or expansion of the tree structure (21), in particular optionally, new data fields are established first and then the superordinate branch is assigned or the branch is established first and then new subordinate data fields are assigned.

36. The method according to one of the claims 28 to 35, wherein the repeat element (25) is formed by one or more characters, a table, a document line, a document column, a table row or a table column.

37. The method according to one of the claims 28 to 36, wherein the repeat element (25) lies in the marked range (24, 38, 44) and in particular comprises the entire marked range (24, 38, 44).

38. The method according to one of the claims 29 to 37, wherein the repeat element (25) is established with the creation of the associated range (24, 38, 44).

39. The method according to one of the claims 29 to 37, wherein the repeat element (25) is established before the creation of the associated range (24, 38, 44).

40. The method according to one of the claims 28 to 39, wherein data of the repeat structure are automatically determined and/or displayed marked in the template document (20) and/or in the input document data stream using the structurally characteristic features of the repeat element (25).

41. The method according to one of the claims 1 to 40, wherein the marking range (24, 38, 44) contains source data fields, and these are linked with at least one structure element of the tree structure (21) that is designed as a data field, wherein given such a linking a rule is automatically created for readout of a source data field from the input document data stream and for storage of its content in the structured data file in the corresponding data field.

42. The method according to one of the claims 28 to 41, wherein via the establishment of a repeat structure (38) or of a repeat element (25) in the template document (20), it is selectably automatically or manually decided whether a new structure element corresponding to the repeat structure (38) or the repeat element (25) is subsequently to be added in an existing tree structure (21).

43. The method according to one of the claims 1 to 42, wherein data fields of the tree structure (21) which are assigned to the repeat structure (38) are assigned to the new structure element as sub-structure elements.

44. The method according to one of the claims 1 to 43, wherein a finding rule for finding repeat structures (38, 34a ... 34g) in which the data structure contained in the marking range reoccurs in the template document (20) is generated for the marking range (24, 38, 44), with which finding rule it can be determined at which positions data of the template document (20) are to be assigned to the marking range (38).

45. The method according to claim 44, wherein the finding rule is specified in row and/or column position coordinates.

46. The method according to one of the claims 1 to 45, wherein the assignment of the structure element to the marking (24, 38, 44) occurs automatically using a structure element present in the template document (20).

47. The method according to one of the claims 1 to 46, wherein an END condition for a marked range (24, 38, 44) is generated in particular automatically.

48. The method according to claim 47, wherein the END condition of the superordinate second range is automatically adopted for a first marked range (39) that is subordinate to a second marked range (38).

49. The method according to one of the claims 1 to 48, wherein an END condition for a marked range (24, 38, 44) is generated and/or changed via a data-driven condition, in particular via a control variable or a condition established by an operating personnel.

50. The method according to one of the claims 1 to 49, wherein the operating personnel has creation, alteration and deletion authority over all rules of the rule set via a menu navigation, and corresponding changes to the stored rules occur automatically.

51. The method according to one of the claims 1 to 50, wherein all ranges of the data stream that belong to a common structure element are similarly marked in particular with the same color, in particular using the structure elements generated in the tree structure (21) within a data stream simultaneously or successively displayed in a first window (28), which data stream contains at least one complete template document (20).

52. The method according to one of the claims 1 to 51, wherein the rules applicable for the data shown in the first window (28) are applied to these data to check the rule set.

53. The method according to claim 52, wherein the application of the rules to the data shown in the first window (28) is graphically illustrated.

54. The method according to claim 53, wherein ranges of various levels and/or types are variously marked in particular with varying colors in the data shown in the first window (28).

55. The method according to one of the claims 52 to 54, wherein a structure element displayed in the second window (29) is selected and all ranges shown in the first window (28) that are assigned to this structure element are automatically displayed.

56. The method according to one of the claims 52 to 55, wherein with regard to a structure element selected in the second window (29), the superordinate and/or subordinate, in levels, structure elements assigned to the structure element or symbols corresponding to the hierarchical classification are automatically displayed.

57. A computer program product for creation of a rule set for a method according to one of the claims 1 to 56, which upon its loading and execution on a computer is executed, the computer program product comprising a graphical user interface with a plurality of windows (28, 29, 30, 31), wherein a template document (20) can be shown in a first window (28), which template document (20) corresponds to the format of the documents contained in the input document data stream, and in a further window (29) the data fields can be arranged in a tree structure (21) that can comprise multiple levels, and comprising means for definition of source data fields and linking of the same with the data fields, wherein given such a linking a rule is automatically created for readout of a source data field from the input document data stream and for storage of its content in the structured data file in the corresponding data field.

58. The computer program product according to claim 57,
**characterized in that**
the means for definition of source data fields is a device for marking (43) of corresponding data.

59. The computer program product according to claim 57 or 58,
**characterized in that**
the means for linking of source data fields with data fields is a device (43) for drawing a connection line between the respective source data field to the corresponding data field.

60. The computer program product according to one of the claims 57 to 59, **characterized in that**
means are provided for marking source data ranges in the template document (20).

61. A system for execution of the method according to one of the claims 1 to 56, comprising a computer, a display device and input means, wherein a computer program product according to the claims 57 to 61 is stored and can be executed on the computer.

## Revendications

1. Procédé pour établir au moins une règle d'un jeu de règles en vue de l'utilisation du jeu de règles dans un procédé de conversion d'un flux de données documentaires d'entrée présentant un ou plusieurs documents en un jeu structuré de données pour former un flux de données documentaires de sortie, et dans lequel pour la conversion du flux de données documentaires d'entrée,
des données sont extraites du flux de données documentaires d'entrée en fonction du jeu de règles et sont conservées en mémoire dans le fichier de données structuré,
des noms de champ sont associés aux différents champs de données (22) du fichier de données structuré et les champs de données (22) sont structurés en plusieurs niveaux de données,
le jeu de règles étant formé de telle sorte que des données quelconques provenant du flux de données documentaires d'entrée peuvent être représentées sur un champ de données (22) quelconque du fichier de données structuré,
tandis que pour l'établissement des règles :
au moins un document modèle (20) qui correspond au format des documents que contient le flux de données documentaires d'entrée est présenté dans une première fenêtre (28) d'une surface graphique d'utilisateur qui compte plusieurs fenêtres, les champs de données étant disposés dans une deuxième fenêtre (29) dans une structure arborescente (21) qui comporte plusieurs niveaux,
une donnée de source (23, 33) du document modèle (20) est marquée par des moyens graphiques ou plusieurs données de source, en particulier associées logiquement, du document modèle (20) sont marquées en tant que plages intégrées de marquage (24, 24/1, 24/2, 24/3, 24/4, 24/5, 24/6, 38, 44) et au moins un élément structurel (21, 22, 22/I, 22/II), correspondant à la plage de marquage (23; 24), de la structure arborescente (21) est attribué à la plage de marquage (23, 24, 38, 44), le document modèle (20) étant représenté en lignes et en colonnes et la plage de marquage (24, 38, 44) pouvant être sélectionnée librement, ligne par ligne et colonne par colonne,
un élément répété (25) caractéristique d'une structure qui se répète dans le document modèle (20), structure appelée répétée, est sélectionné,
la position des lignes et/ou des colonnes dans la plage de marquage du document modèle (20) est saisie manuellement ou automatiquement en tant que donnée structurelle caractéristique de l'élément répété (25) et/ou un texte contenu dans la plage de marquage du document modèle (20) est saisi manuellement ou automatiquement en tant que donnée caractéristique de l'élément répété,
plusieurs plages de marquage (38, 39) empilées les unes dans les autres en plans chevauchés et affichés simultanément sont marquées dans le document modèle (20) et
de manière automatique sous l'assistance d'un ordinateur ou manuellement par menu de guidage de l'opérateur, la structure arborescente (21) est présentée et des éléments structurels de la structure arborescente (21) sont insérés, modifiés et/ou effacés, des modifications appropriées s'effectuant automatiquement sur les éléments structurels conservés en mémoire.

2. Procédé selon la revendication 1, **caractérisé en ce qu'**un champ (23, 36, 37, 39, 40) de données de source est défini par le marquage de données du document modèle, le champ (23, 36, 37, 39, 40) de données de source est associé à un champ de données (22) de la structure arborescente (21) par attribution d'un élément structurel (21, 22, 22/I, 22/II) correspondant et une règle est établie automatiquement pour lire un champ de données de source dans le flux de données documentaires d'entrée et pour conserver son contenu dans le champ de données (22) correspondant selon le fichier de données structuré.

3. Procédé selon les revendications 1 ou 2, **caractérisé en ce que** le flux de données documentaires d'entrée est divisé en plusieurs documents, un jeu de données structuré étant conservé en mémoire pour chaque document dans le fichier de données structuré.

4. Procédé selon l'une des revendications 1 à 3, **caractérisé en ce que** les documents peuvent comporter plusieurs pages, les données étant extraites page par page.

5. Procédé selon l'une des revendications 1 à 4, **caractérisé en ce que** le flux de données documentaires d'entrée comporte uniquement des signes codés au moyen d'un ou plusieurs tableaux de signes (pages de codes) (ASCII, EBCDIC, Unicode, DBCS, ...), des retours ligne et des retours page.

6. Procédé selon l'une des revendications 1 à 4, **caractérisé en ce que** le flux de données documentaires d'entrée comporte uniquement des signes codés au moyen d'un seul tableau de signes (page de codes) (ASCII, EBCDIC, Unicode, DBCS, ...), des retours lignes et des retours pages.

7. Procédé selon les revendications 5 ou 6, **caractérisé en ce que** les retours ligne et/ou les retours page sont tous codés par une succession définie de signes.

8. Procédé selon l'une des revendications 5 à 7, **caractérisé en ce que** les retours ligne et/ou les retours page sont tous codés par un nombre défini de signes ou de lignes.

9. Procédé selon l'une des revendications 1 à 8, **caractérisé en ce que** des données du flux de données documentaires d'entrée qui sont disposées dans des champs de données de source (23, 36, 37, 39, 40) définis du flux de données documentaires d'entrée sont extraites, les champs de données de source (23, 36, 37, 39, 40) étant définis les numéros de signes de la ou de chaque ligne.

10. Procédé selon l'une des revendications 1 à 9, **caractérisé en ce que** des données du flux de données documentaires d'entrée qui sont disposées dans des champs de données de source (23, 36, 37, 39, 40) définis du flux de données documentaires d'entrée sont extraites, les champs de données de source (23, 36, 37, 39, 40) étant définis par le ou les numéros de lignes et les numéros de signes de la ou des lignes à l'intérieur d'une plage de données de source définies d'un document.

11. Procédé selon la revendication 10, **caractérisé en ce qu'**au moins un élément de position de la plage de données de source est défini dans le document ou dans une autre plage de données de source.

12. Procédé selon la revendication 11, **caractérisé en ce que** plusieurs éléments de position, en particulier un élément de position initial et un élément de position final de la plage de données de source sont définis dans chaque page ou dans une autre plage de
données de source.

13. Procédé selon les revendications 11 ou 12, **caractérisé en ce que** le ou les éléments de position de la plage de données de source sont définis en tant qu'emplacements absolus par indication du nombre de lignes et du nombre de signes de chaque ligne de chaque page ou dans l'autre plage de données de source.

14. Procédé selon l'une des revendications 11 ou 12, **caractérisé en ce que** le ou les éléments de position de la plage de données de source sont définis comme emplacements relatifs d'une succession définie de signes de chaque page ou de l'autre plage de données de source.

15. Procédé selon la revendication 14, **caractérisé en ce que** la succession de signes est indépendante de la position, est disposée dans une certaine plage ou est disposée en un emplacement défini par le numéro de ligne et le numéro de signe dans la ou les lignes de chaque page ou d'une autre plage de données de source.

16. Procédé selon l'une des revendications 10 à 15, **caractérisé en ce que** plusieurs champs (23, 36, 37, 39, 40) de données de source sont disposés dans une plage (24) de données de source.

17. Procédé selon l'une des revendications 10 à 16, **caractérisé en ce que** plusieurs plages (24) de données de source sont disposées dans une autre plage (24) de données de source.

18. Procédé selon l'une des revendications 11 à 17, **caractérisé en ce qu'**une première plage (24) de données de source qui est associée à une deuxième plage (24) de données de source peut être définie de telle sorte que la première plage (24) de données de source n'intervienne que dans la deuxième plage (24) de données de source.

19. Procédé selon l'une des revendications 12 à 18, **caractérisé en ce que** lors de l'extraction, on saisit au moyen d'un pointeur de plage de données de source dans quelle plage (24) de données de source les données sont en cours d'extraction, la plus grande plage (24) de données de source correspondant à l'ensemble du document, et à la fin d'une plage, le pointeur de plage de données de source indique l'ensemble du document et au cas où une plage qui présente une condition finale à la fin de la page n'aurait pas encore été traitée complètement, une valeur indiquant cette plage de données de source est conservée en mémoire dans un pointeur de changement de page de telle sorte que lors du traitement d'une page suivante, après le traitement de lignes typiques de la page, cette plage de données de source est poursuivie jusqu'à ce que la condition finale soit atteinte.

20. Procédé selon l'une des revendications 11 à 19, **caractérisé en ce qu'**une plage définie (24) de données de source est détectée plusieurs fois dans un document d'entrée, et le jeu de règles définissant cette plage (24) de données de source est appliqué un nombre suffisant de fois pour extraire les données et conserver les données dans le fichier de données structuré.

21. Procédé selon l'une des revendications 1 à 20, **caractérisé en ce qu'**un jeu de règles est défini au moyen de champs (23, 36, 37, 39, 40) de données de source qui sont placées dans le flux de données documentaires d'entrée sur les données à extraire, le positionnement s'effectuant par adressage absolu ou relatif.

22. Procédé selon la revendication 21, **caractérisé en ce que** le positionnement des champs (23, 36, 37, 39, 40) de données de source s'effectue au moyen de plages (24) de données de source dans chacune desquelles un ou plusieurs champs (23, 36, 37, 39, 40) de données de source ou d'autres plages (24) de données de source sont disposées.

23. Procédé selon la revendication 22, **caractérisé en ce que** les plages (24) de données de source comprennent comme éléments structurels d'autres plages (24) de données de source, d'autres champs (23, 36, 37, 39, 40) de données de source et/ou des éléments de commande, des conditions de détection des limites du document et/ou des pages et/ou de recherche de signes ou de successions de signes en particulier modifiés et/ou de conditions de positionnement de plages (24) de données de source étant définis au moyen d'éléments de commande associés logiquement.

24. Procédé selon l'une des revendications 1 à 23, dans lequel l'élément structurel (21, 22, 22/I, 22/II) est de plus attribué à la structure arborescente (21) et est représenté dans cette dernière.

25. Procédé selon l'une des revendications 1 à 24, dans lequel l'élément structurel est associé à une branche (21a) de la structure arborescente (21).

26. Procédé selon l'une des revendications 1 à 25, dans lequel un aimant correspondant à un type de page, un champ de données, un tableau ou une plage comportant plusieurs champs de données est associé à la plage de marquage (24) en tant qu'élément structurel.

27. Procédé selon l'une des revendications 1 à 26, dans lequel les positions des lignes sont saisies en tant que données structurelles caractéristiques de l'élément répété (25).

28. Procédé selon l'une des revendications 1 à 27, dans lequel la position des colonnes est saisie comme donnée structurelle caractéristique de l'élément répété (25).

29. Procédé selon la revendication 28, dans lequel une règle de répétition par laquelle toutes les données d'une structure répétée associées au document modèle (20) et/ou au flux de données documentaires d'entrée peuvent être détectées est formée en particulier par les données caractéristiques.

30. Procédé selon les revendications 28 ou 29, dans lequel un élément (23, 33) ou une plage (24, 38, 44) du document modèle (20) sont sélectionnés au moyen d'un dispositif d'affichage (43), et en particulier lors de l'actionnement d'une première touche d'un dispositif d'introduction, des possibilités d'attribution disponibles pour cet élément (23, 33) ou cette plage (24, 38, 44) sont affichées automatiquement en fonction du contexte.

31. Procédé selon l'une des revendications 28 à 30, dans lequel en fonction de la position d'un dispositif d'affichage (43) et en particulier de l'actionnement d'une deuxième touche d'un dispositif d'introduction, au moins un élément (23) apte à être attribué et/ou au moins une plage (24, 38, 44) apte à être attribuée du document modèle (20) sont mis en avant automatiquement dans le document modèle (20).

32. Procédé selon l'une des revendications 28 à 31, dans lequel une plage répétée (38) comportant plusieurs données dans le document modèle (20) est marquée et un élément structurel correspondant à une sélection opérée en fonction d'un menu par un opérateur est associé à la sélection.

33. Procédé selon l'une des revendications 1 à 32, dans lequel pour la plage marquée (23, 24, 33, 38, 44) et/ou une plage répétée, une condition FIN est définie automatiquement ou manuellement.

34. Procédé selon l'une des revendications 1 à 33, dans lequel une branche (21a) de la structure arborescente (21) est définie comme élément structurel et un champ de type ARRAY correspondant à la branche (21a) est défini dans le fichier de données structuré.

35. Procédé selon la revendication 34, dans lequel plusieurs champs de données sont associés à une branche (21a) de la structure arborescente (21) en tant qu'éléments structurels subordonnés, et pour l'établissement et/ou l'agrandissement de la structure arborescente (21), des champs de données, en particulier nouveaux, sont définis, pour ensuite être associés à la branche subordonnée, ou d'abord la branche est définie et ensuite de nouveaux champs de données subordonnés sont associés.

36. Procédé selon l'une des revendications 28 à 35, dans lequel l'élément répété (25) est formé d'un ou plusieurs signes, d'un tableau, d'une ligne d'un document, d'une colonne d'un document, d'une ligne d'un tableau ou d'une colonne d'un tableau.

37. Procédé selon l'une des revendications 28 à 36, dans lequel l'élément répété (25) est situé dans la plage marquée (24, 38, 44) et comporte en particulier l'ensemble de la plage marquée (24, 38, 44).

38. Procédé selon l'une des revendications 29 à 37, dans lequel l'élément répété (25) est défini lors de l'établissement de la plage (24, 38, 44) associée.

39. Procédé selon l'une des revendications 29 à 37, dans lequel l'élément répété (25) est défini avant l'établissement de la plage (24, 38, 44) associée.

40. Procédé selon l'une des revendications 28 à 39, dans lequel des données de la structure répétée, déterminées et/ou marquées automatiquement à l'aide des caractéristiques structurelles de l'élément répété (25), dans le document modèle (20) et/ou dans le flux de données documentaires d'entrée sont affichées.

41. Procédé selon l'une des revendications 1 à 40, dans lequel la plage (24, 38, 44) de marquage contient des champs de données de source, ces dernières étant associées à au moins un élément structurel, configuré comme champ de données, de la structure arborescente (21), et dans le cas d'une telle association, une règle est établie automatiquement pour la lecture d'un champ de données de source dans le flux de données documentaires d'entrée et pour conserver son contenu dans le champ de données correspondant du fichier de données structuré.

42. Procédé selon l'une des revendications 28 à 41, dans lequel par la définition d'une structure répétée (38) ou d'un élément répété (25) du document modèle (20), il est décidé, automatiquement ou de manière sélectionnée manuellement, si un nouvel élément structurel correspondant à la structure répétée (38) ou à l'élément répété (25) est ajouté ultérieurement dans une structure arborescente (21) existante.

43. Procédé selon l'une des revendications 1 à 42, dans lequel des champs de données de la structure arborescente (21), associés à la structure répétée (38), sont associés en tant qu'éléments sous-structurels dans le nouvel élément structurel.

44. Procédé selon l'une des revendications 1 à 43, dans lequel une règle de découverte servant à découvrir des structures répétées (38, 34a, ... 34g) dans lesquelles la structure de données que contient la plage de marquage (38) revient de nouveau dans le document modèle (20) est formée à la plage de marquage (24, 38, 44) et permet de déterminer en quelles positions des données du document modèle (20) doivent être associées à la plage de marquage (38).

45. Procédé selon la revendication 44, dans lequel la règle de découverte est indiquée en coordonnées de position ligne par ligne et/ou colonne par colonne.

46. Procédé selon l'une des revendications 1 à 45, dans lequel l'attribution de l'élément structurel pour le marquage (24, 38, 44) s'effectue automatiquement en utilisant un élément structurel présent dans le document modèle (20).

47. Procédé selon l'une des revendications 1 à 46, dans lequel une condition finale pour une plage marquée (24, 38, 44) est formée en particulier automatiquement.

48. Procédé selon la revendication 47, dans lequel pour une première plage marquée (39), qui est subordonnée à une deuxième plage subordonnée (38), reprend automatiquement la condition FIN de la deuxième plage superordonnée.

49. Procédé selon l'une des revendications 1 à 48, dans lequel une condition FIN pour une plage marquée (24, 38, 44) est formée et/ou modifiée par une condition découlant les données, en particulier une variable de commande ou une variable apportée par un opérateur.

50. Procédé selon l'une des revendications 1 à 49, dans lequel l'opérateur dispose d'une autorisation d'établissement, de modification et d'effacement de toutes les règles du jeu de règles, par l'intermédiaire d'un menu, et les modifications appropriées des règles conservées en mémoire s'effectuent automatiquement.

51. Procédé selon l'une des revendications 1 à 50, dans lequel en particulier à l'aide des éléments structurels formés dans la structure arborescente (21) à l'intérieur d'un flux de données affiché simultanément ou successivement dans la première fenêtre (28) et qui contient au moins un document modèle (20) complet, toutes les plages du flux de données appartenant à un élément structurel commun sont marquées de la même manière et en particulier de la même couleur.

52. Procédé selon l'une des revendications 1 à 51, dans lequel pour vérifier le jeu de règles, les règles valides sur les données représentées dans la première fenêtre (28) sont appliquées sur ces données.

53. Procédé selon la revendication 52, dans lequel l'application des règles sur les données présentées dans la première fenêtre (28) est affichée graphiquement.

54. Procédé selon la revendication 53, dans lequel des plages de différents niveaux et/ou types de données représentées dans la première fenêtre (28) sont marquées différemment, en particulier en couleurs différentes.

55. Procédé selon l'une des revendications 52 à 54, dans lequel un élément structurel affiché dans la deuxième fenêtre (29) est sélectionné et toutes les plages représentées dans la première fenêtre (28) et associées à cet élément structurel sont affichées automatiquement.

56. Procédé selon l'une des revendications 52 à 55, dans lequel les éléments structurels associés à l'élément structurel d'un niveau supérieur et/ou d'un niveau inférieur ou l'ordre hiérarchique de symboles correspondants sont affichés automatiquement pour un élément structurel sélectionné dans la deuxième fenêtre (29).

57. Produit de programme informatique permettant d'établir un jeu de règles pour un procédé selon l'une des revendications 1 à 56 et exécuté lors du chargement et de son exécution sur un ordinateur, le produit de programme informatique comprenant une surface graphique comptant plusieurs fenêtres (28, 29, 30, 31), un document modèle (20) pouvant être représenté dans une première fenêtre (28) et correspondant au format des documents que contient le flux de données documentaires d'entrée, les champs de données pouvant être disposés dans une deuxième fenêtre (29) en une structure arborescente (21) qui peut comporter plusieurs niveaux, et des moyens de définition de champs de données de source et d'association de ces derniers à des champs de données, lors de cette association, une règle étant établie automatiquement pour lire un champ de données de source dans le flux de données documentaires d'entrée et pour conserver son contenu dans le fichier de données structuré du champ de données correspondant.

58. Produit de programme informatique selon la revendication 57, **caractérisé en ce que** le moyen de définition des champs de données de source est un dispositif de marquage (43) de données correspondantes.

59. Produit de programme informatique selon les revendications 57 ou 58, **caractérisé en ce que** le moyen d'association de champs de données de source avec champs de données est un dispositif (43) d'extraction d'une ligne de liaison entre le champ de données de source concerné et le champ de données correspondant.

60. Produit de programme informatique selon l'une des revendications 57 à 59, **caractérisé en ce que** les moyens de marquage des plages de données de source du document modèle (20) sont prévus.

61. Système permettant l'exécution du procédé selon l'une des revendications 1 à 56 et comprenant un ordinateur, un dispositif d'affichage et un moyen d'introduction, un produit de programme informatique selon les revendications 57 à 61 pouvant être conservé en mémoire et exécuté sur l'ordinateur.
